# FASCICULE DE BREVET EUROPEEN

(11) **EP 4 300 762 B1**
(45) Date de publication et mention de la délivrance du brevet: **05.03.2025**
(21) Numéro de dépôt: 23180541.7
(22) Date de dépôt: 21.06.2023
(51) Int. Cl.: H02J 7/00, H01M 50/578

(54) **DISPOSITIF ET PROCÉDÉ D'ISOLEMENT D ACCUMULATEUR ÉLECTRIQUE À RÉSERVE DE MATIÈRE CONDUCTRICE FUSIBLE**
VORRICHTUNG UND VERFAHREN ZUR ISOLIERUNG EINES ELEKTRISCHEN AKKUMULATORS MIT SCHMELZBARER LEITFÄHIGER MATERIALRESERVE
DEVICE AND METHOD FOR INSULATING AN ELECTRIC ACCUMULATOR WITH A RESERVE OF FUSIBLE CONDUCTIVE MATERIAL

(30) Priorité: 22.06.2022 FR 2206210
(43) Date de publication de la demande: 03.01.2024
(73) Titulaire: Commissariat à l'Energie Atomique et aux Energies Alternatives, 75015 Paris (FR)
(72) Inventeur: CHATROUX, Daniel, 38054 Grenoble Cedex 09 (FR); CHAUVIN, Julien, 38054 Grenoble Cedex 09 (FR); DAUCHY, Julien, 38054 Grenoble Cedex 09 (FR); GAILLARD, Frédéric, 38054 Grenoble Cedex 09 (FR); GIODA, Alexis, 38054 Grenoble Cedex 09 (FR)
(74) Mandataire: INNOV-GROUP

(56) Documents cités:
- FR-A1- 3 118 335
- US-A1- 2003 027 036
- US-A1- 2014 170 450
- US-A1- 2015 044 528
- US-B2- 7 233 474

## Description

### DOMAINE TECHNIQUE

L'invention se rapporte au domaine de la gestion du stockage d'énergie électrique et concerne plus particulièrement les éléments de sécurité de ce stockage d'énergie.

Les accumulateurs électriques, et en particulier les accumulateurs électrochimiques, sont généralement conditionnés sous forme de batteries, dans lesquelles des éléments unitaires, généralement dénommés cellules, sont connectés en série et/ou en parallèle. L'association de ces cellules en série permet d'obtenir des tensions plus élevées, et leur association en parallèle permet d'obtenir des capacités plus élevées pour des énergies stockées plus importantes.

La plupart des batteries employées dans des domaines aussi divers que les véhicules électriques, le matériel électronique, l'outillage électroportatif, etc. comportent généralement au moins une branche de cellules ou d'accumulateurs en série.

### ART ANTÉRIEUR

Dans les batteries connues qui comportent au moins une branche d'accumulateurs connectés en série, la défaillance de l'un des accumulateurs entraine généralement une mise hors service de l'ensemble des accumulateurs de cette branche.

Les batteries connues sont généralement associées à des circuits de gestion contrôlant par exemple les températures et les tensions des accumulateurs. Ces circuits de gestion peuvent être munis d'éléments coupe-circuit, tels que des transistors ou des relais, qui agissent en cas de défaillance d'un accumulateur, en déconnectant la batterie dans son ensemble ou au moins la branche dans laquelle l'accumulateur défectueux est monté en série avec d'autres accumulateurs. Pour pallier au défaut d'un accumulateur, une branche entière de la batterie, voire l'ensemble de la batterie est ainsi généralement rendu inopérant. Un exemple est la demande de brevet US 72334774.

Il existe cependant des solutions pour isoler un accumulateur présentant un défaut au sein d'une batterie. La demande de Brevet US20140272491 décrit un élément de sécurité pour cellule de batterie, comportant une membrane conductrice interne qui est déformée lorsque la pression augmente dans l'accumulateur. Lorsque la pression interne de l'accumulateur dépasse une valeur prédéterminée, la membrane court-circuite les deux pôles de l'accumulateur, ce qui occasionne une coupure du circuit interne à la batterie par un coupe-circuit de protection. Le dispositif d'isolement d'accumulateur électrique décrit permet ainsi d'isoler un accumulateur électrique par rapport au reste du circuit électrique auquel il est connecté, tout en mettant en court-circuit les bornes de la cellule de batterie défectueuse. La cellule défectueuse est ainsi isolée du circuit de courant et le circuit électrique continue d'être alimenté par les éventuelles autres cellules qui étaient branchées en série avec la cellule défectueuse.

Un tel dispositif d'isolement d'accumulateur électrique est activé uniquement par un défaut relatif à une augmentation de pression interne d'une cellule de batterie.

Par ailleurs, le contact électrique détaillé dans le document US20140272491, permettant de court-circuiter les bornes de la cellule en défaut, peut être, dans le meilleur des cas, de l'ordre de 1 mΩ. Cette résistance parasite correspond, par exemple pour un courant de 200 A, à une perte de 40 W générant des problématiques de transfert et d'évacuation thermique de cette puissance. La résistance parasite de ce contact est de plus très dépendante de l'état de surface et d'oxydation des pièces venant en contact.

Par ailleurs, la publication scientifique « Power Antifuse Device to Bypass or Turn-off Battery Cells in Safety-Critical and Fail-Operational Systems », V.R.H. Lorentz et al., parue dans la revue IEEE (978-1-5090-4974-5/18, DOI :10.1109/IESES.2018.8349850) décrit un dispositif d'isolement d'accumulateur électrique assimilable à un interrupteur commandé qui est composé de deux conducteurs de puissance imbriqués et séparés par un matériau électriquement isolant. Ce montage est associé à un élément pyrotechnique qui peut être déclenché par un signal électrique. L'élément pyrotechnique, lorsqu'il est activé, permet de faire fondre une réserve de métal d'apport, qui vient réaliser une brasure entre les deux conducteurs de puissance et qui interconnecte ainsi ces conducteurs de puissance par brasage, pour isoler un accumulateur électrique du circuit de courant en maintenant la continuité pour le reste du circuit électrique. Des éléments externes à ce dispositif d'isolement sont prévus pour identifier la présence d'un défaut nécessitant l'isolement d'un accumulateur, et de déclencher en conséquence l'élément pyrotechnique relatif à cet accumulateur.

Par ailleurs, la demande de brevet français déposée par le demandeur sous le numéro FR2014096 décrit un dispositif et un procédé d'isolement d'accumulateur électrique dans lesquels un conducteur est adapté à se transférer à l'état liquide sur un dispositif de pontage.

### EXPOSÉ DE L'INVENTION

L'invention a pour but d'améliorer les dispositifs et procédés d'isolement d'accumulateur électrique de l'art antérieur.

À cet effet, l'invention vise un dispositif d'isolement d'accumulateur électrique, adapté à isoler un accumulateur électrique d'un circuit électrique en assurant la continuité de ce circuit électrique, comportant :
- une première borne destinée à la connexion du dispositif d'isolement avec un accumulateur électrique ;
- une deuxième borne destinée à la connexion du dispositif d'isolement avec un accumulateur électrique et avec un circuit électrique ;
- une troisième borne destinée à la connexion du dispositif d'isolement avec un circuit électrique ;
- une chambre de pontage dans laquelle est disposé un dispositif de pontage qui comporte deux conducteurs de pontage séparés par un interstice, l'un des conducteurs de pontage étant raccordé à la deuxième borne et l'autre conducteur de pontage étant raccordé à la troisième borne ;
- un fusible comportant un conducteur coupe-circuit connecté entre la première borne et la troisième borne, ce conducteur coupe-circuit étant disposé dans la chambre de pontage, le fusible étant calibré pour assurer la fusion du conducteur coupe-circuit lorsque l'intensité du courant le traversant dépasse une valeur de seuil prédéterminée ;
- une réserve de matière conductrice fusible dont la température de fusion est inférieure à la température de fusion du conducteur coupe-circuit, la réserve de matière conductrice fusible étant disposée dans la chambre de pontage, et étant adaptée à se transférer à l'état liquide sur le dispositif de pontage.

Selon un autre objet, l'invention vise un circuit électrique comportant un premier accumulateur électrique, au moins un deuxième accumulateur électrique, une charge alimentée par ces accumulateurs électriques, et un dispositif d'isolement d'accumulateur électrique tel que décrit ci-dessus, et dont :
- la première borne est connectée à une borne du premier accumulateur électrique ;
- la deuxième borne est connectée à une autre borne du premier accumulateur électrique, et à une borne de ladite charge ;
- une troisième borne est connectée à une autre borne de ladite charge ;
le dispositif d'isolement d'accumulateur électrique étant adapté à isoler le premier accumulateur électrique du deuxième accumulateur électrique et de ladite charge, en assurant la continuité de l'alimentation de ladite charge par le deuxième accumulateur électrique.

L'expression « la deuxième borne est connectée à une borne de ladite charge » définit ici le fait que cette deuxième borne est soit directement connectée à la charge, soit y est indirectement connectée au travers du deuxième accumulateur et d'autres éventuels accumulateurs supplémentaires.

De même l'expression « la troisième borne est connectée à une autre borne de ladite charge » définit ici le fait que cette troisième borne est soit directement connectée à la charge, soit y est indirectement connectée au travers du deuxième accumulateur et d'autres éventuels accumulateurs supplémentaires.

Selon une caractéristique préférée, le premier accumulateur électrique et au moins le deuxième accumulateur électrique sont montés en série avec la charge par l'intermédiaire du fusible.

Selon un autre objet, l'invention vise un procédé d'isolement d'un accumulateur électrique par rapport à un circuit électrique, mettant en œuvre un dispositif d'isolement d'accumulateur électrique tel que décrit ci-dessus, et comportant les étapes suivantes :
- soumettre le fusible à un surcourant qui échauffe le conducteur coupe-circuit et la réserve de matière conductrice fusible au-delà de leur température de fusion respective ;
- transférer au moins une partie de la réserve de matière conductrice fusible qui est à l'état liquide dans l'interstice séparant les conducteurs de pontage.

L'expression « adapté à isoler un accumulateur électrique d'un circuit électrique en assurant la continuité de ce circuit électrique » signifie précisément que le dispositif permet de mettre hors du circuit du courant électrique un accumulateur (notamment parce qu'il est défectueux) et que cet accumulateur est remplacé dans le circuit du courant électrique auquel il était connecté par un pontage (« by-pass », en anglais) permettant de maintenir la continuité dans ce circuit électrique. Lorsque ce circuit électrique comporte une charge alimentée par d'autres accumulateurs électriques en série avec l'accumulateur isolé, l'isolement de ce dernier et le pontage permet aux autres accumulateurs électriques de continuer à alimenter la charge.

Dans le dispositif selon l'invention, la résistance du contact permettant la continuité du circuit électrique dépourvu de l'accumulateur électrique, est à priori inférieure à 100 µΩ, ce qui ne pose aucun problème d'évacuation d'énergie pour la très grande majorité des batteries, y compris les batteries de forte puissance des véhicules électriques.

L'invention est particulièrement avantageuse dans le cas des accumulateurs de technologie Lithium-ion qui présentent l'avantage de stocker des énergies beaucoup plus importantes avec des masses et volumes réduits, tout en étant apte à fournir des puissances élevées à la décharge et supporter des puissances élevées à la charge, donc de pouvoir avoir des temps de charge de quelques dizaines de minutes par exemple. L'inconvénient principal des chimies Lithium-ion est le risque d'emballement thermique pouvant amener à un départ de feu de l'accumulateur concerné par un défaut, une propagation du défaut aux accumulateurs voisins, pouvant même se propager à toute la batterie. Le dispositif d'isolement d'accumulateur électrique selon l'invention permet de prévenir tout risque en isolant un accumulateur défectueux, tout en maintenant une continuité de service, au moins en mode dégradé, de la batterie.

L'invention évite une ouverture globale du circuit et un arrêt de la fourniture d'énergie, suite à la détection d'un défaut.

Actuellement, la plupart des batteries de voitures électriques, par exemple, sont constituées d'une seule branche d'accumulateurs lithium-ion en série. La capacité de ces accumulateurs étant de plusieurs dizaines d'ampères-heures, et la tension globale variant dans la plage 300 V à 400 V. L'invention permet une commutation naturelle ou pilotée entre l'état où l'accumulateur est connecté au sein de la mise en série par la connexion via le fusible, et l'état où l'accumulateur a une de ses bornes déconnectées, un pontage permettant alors de continuer à utiliser le reste des accumulateurs de la mise en série d'accumulateurs.

Vis-à-vis de l'état de l'art qui est de procéder habituellement à quelques mesures de température locale au sein de l'ensemble d'un pack batterie et d'ouvrir la totalité du circuit électrique en cas de défaut, l'invention peut se placer sur chaque accumulateur du pack batterie et peut ouvrir uniquement le circuit de l'accumulateur en défaut tout en assurant un pontage pour le courant, pour la continuité de service. L'invention permet d'accroitre la sécurité d'un pack batterie d'une part en agissant plus rapidement que les moyens de protections thermiques habituels, où il faut que la température se propage à d'autres cellules avant d'être détectée, et d'autre part en assurant la continuité de fonctionnement de l'ensemble, ce qui selon les applications, notamment dans le transport de personne, peut s'avérer être un élément clé de la sécurité.

L'invention permet une modularité dans le déclenchement du dispositif d'isolement. Le déclenchement par un surcourant (une surintensité) échauffant le fusible peut être complétée par une commande issue de l'électronique de gestion de la batterie, ou par tout autre mode de déclenchement connu (par exemple, ajout d'une résistance de chauffage pour déclenchement piloté par l'électronique de gestion).

L'invention peut être externe à l'accumulateur ou peut être intégrée au sein de celui-ci.

Des modes de réalisation de l'invention présentent l'avantage de ne pas nécessiter d'électroniques ni d'alimentation de ces électroniques pour fonctionner. Le déclenchement naturel relatif à une surintensité (ou par la pression dans l'accumulateur, ou encore la température) permet d'assurer des hauts niveaux de sûreté de fonctionnement, sans nécessiter des électroniques redondantes et/ou qualifiées. La sûreté de déclenchement telle que le permet l'invention est plus particulièrement importante pour les applications dont le niveau de sécurité exigé est très élevé comme l'aéronautique par exemple.

Contrairement aux règles de l'art établies pour la protection électrique, selon lesquelles un court-circuit est à éviter autant que possible, l'invention met à profit un court-circuit pour la réalisation des fonctions du dispositif d'isolement.

Une application intéressante de l'invention est le domaine des transports et plus particulièrement les véhicules électriques ou hybrides. En effet, les demandes ainsi que les contraintes dans le domaine des véhicules électriques tendent à s'intensifier tout comme les risques liés à l'utilisation de technologies d'accumulateurs représentant des énergies embarquées de plus en plus importantes en fonction de l'augmentation des autonomies des véhicules. Il est alors capital de fournir des systèmes de sécurité minimisant le risque d'emballement du pack batterie et ce quelle que soit la nature du défaut, interne ou externe.

L'invention permet aussi d'apporter une continuité de service du pack batterie. Pour un véhicule routier, cela permet d'offrir la possibilité d'aller se garer en sécurité, ou de terminer le trajet selon la gravité du défaut ayant déclenché le dispositif d'isolement d'un accumulateur défectueux.

Par ailleurs, les voitures électriques ont actuellement deux batteries, la batterie de traction, classiquement sous 300 V à 400 V, et la batterie accessoire qui est classiquement une batterie au plomb dont la tension nominale est de 12 V La batterie accessoire, du type de celle des véhicules thermiques, est conservée pour démarrer l'électronique du véhicule, et surtout pour assurer les fonctions de sécurité (éclairage, fonctionnement des feux de détresse, etc.). La batterie de traction n'est actuellement pas considérée comme une source d'énergie suffisamment sûre pour assurer ces fonctions, puisqu'un défaut interne à la batterie sur l'un quelconque de ses accumulateurs provoque l'ouverture des contacteurs de la batterie et la déconnexion de celle-ci. Avec l'invention, la continuité de service obtenue peut permettre de modifier l'architecture électrique du véhicule en vue de supprimer la batterie accessoire puisque la batterie principale peut assurer la continuité de service en cas d'accident.

Le fait que, actuellement, les voitures électriques n'offrent pas de continuité de service en cas de défaut d'un accumulateur au sein du pack batterie est accepté du fait de la présence d'un conducteur formé, responsable et attentif à la conduite à bord. Pour les véhicules électriques autonomes en cours de développement, qui prennent en charge tout ou partie de la conduite, il est souhaitable d'assurer une continuité de service pour la sécurité de la conduite. La continuité de service peut aussi être une fonction qui devienne obligatoire pour les véhicules autonomes du fait de l'absence possible de conducteur formé et responsable apte à prendre en charge la conduite ou la mise en sécurité du véhicule en cas de dysfonctionnement.

Pour un avion ou un bateau, la continuité de service apportée par l'invention permet l'utilisation sur des fonctions critiques. En effet, l'invention assure la continuité de service du pack batterie dans le cas d'un défaut d'un accumulateur, ce qui, contrairement à ce qui est habituel, permet au véhicule de continuer à fonctionner avec une autonomie légèrement réduite plutôt que stopper son fonctionnement. Cet avantage peut s'avérer très pertinent dans le domaine de l'aéronautique ou de la marine, où la continuité de service est primordiale. L'invention présentée est tout à fait adaptable sur des cellules prismatiques utilisées dans plusieurs domaines de transports.

L'invention présente l'avantage d'être optionnellement activable par un système électronique externe. Par exemple le dispositif d'isolement peut être piloté par le système d'airbag d'un véhicule, ce qui permettrait d'isoler électriquement la totalité des accumulateurs du circuit de la voiture et contrairement à ce qui est usuel, ne laisserait pas de tension aux bornes du pack, assurant la sécurité lors des manœuvres des organismes de secours du fait de l'absence des risques d'électrisation et de court-circuit.

Cette protection apportée par l'invention est plus particulièrement intéressante en cas d'immersion totale ou partielle du véhicule.

L'invention permet aussi de ponter la totalité des accumulateurs en cas d'un feu de batterie, soit interne à celle-ci, soit consécutive à un feu du véhicule. L'absence de tension du fait du déclenchement de l'invention sur tous les accumulateurs permet aux pompiers d'arroser le véhicule puis de noyer la batterie sans risques électriques et sans génération d'hydrogène par électrolyse de l'eau par les pièces restant classiquement sous tension au sein de la batterie.

Dans le domaine des accumulateurs, les tensions mises en œuvre ne sont que de quelques volts, et les câblages sont réduits. Par rapport aux conditions standards de l'utilisation des fusibles, l'invention doit traiter un arc réduit, sous faible tension, avec une puissance, donnant lieu à la fusion des matériaux et à un arc électrique, qui est réduite, ainsi qu'une énergie dans des inductances de câblage minimisée. Ces caractéristiques de l'application permettent de favoriser la fusion du métal ou de l'alliage métallique du fusible et limiter la vaporisation.

Classiquement, les fusibles utilisés pour des niveaux de courant de plusieurs centaines d'ampères comme c'est le cas pour les véhicules électriques, sont à base de cuivre ou d'argent pour minimiser les pertes résistives du fusible, avec une faible quantité de matière. Dans le cadre de l'invention, le fusible est de préférence réalisé par un métal ou un alliage de métaux à basse température de fusion, par exemple inférieure à 400 °C, ce qui permet de plus d'employer un boitier (qui se trouvera impacté par le matériau du fusible à l'état liquide) réalisé en un polymère adapté (polyimide ou verre époxy par exemple) et à cout réduit.

Le dispositif d'isolement d'accumulateur électrique selon l'invention peut comporter les caractéristiques additionnelles suivantes, seules ou en combinaison :
- le conducteur coupe-circuit est disposé en vis-à-vis de la réserve de matière conductrice fusible ;
- la réserve de matière conductrice fusible est disposée en vis-à-vis des conducteurs de pontage ;
- les conducteurs de pontage sont agencés en dessous de la réserve de matière conductrice fusible ;
- les conducteurs de pontage sont agencés circonférenciellement par rapport à la réserve de matière conductrice fusible ;
- le dispositif comporte un tampon sollicitant la réserve de matière conductrice fusible en direction des conducteurs de pontage ;
- le dispositif comporte un isolant électrique thermoconducteur placé entre le conducteur coupe-circuit et la réserve de matière conductrice fusible ;
- le dispositif comporte un isolant électrique perméable placé entre la réserve de matière conductrice fusible et les conducteurs de pontage, cet isolant électrique perméable étant adapté à laisser passer le matériau de la réserve de matière conductrice fusible lorsque ce dernier est à l'état liquide ;
- ledit isolant électrique perméable est une feuille de matériau fusible, dont la température de fusion est inférieure à la température de fusion de la réserve de matière conductrice fusible ;
- les conducteurs de pontage présentent des motifs géométriques complémentaires imbriqués, l'interstice étant disposé le long de ces motifs géométriques ;
- les conducteurs de pontage présentent un état de surface adapté au brasage par le matériau de la réserve de matière conductrice fusible, lorsque ce dernier est à l'état liquide ;
- la réserve de matière conductrice fusible est agencée sous forme d'au moins un amas rapporté sur au moins l'un des conducteurs de pontage, et adapté à se répandre dans l'interstice lorsque la réserve de matière conductrice fusible est à l'état liquide ;
- le dispositif comporte au moins une branche de commande disposée entre la deuxième borne et la troisième borne, en parallèle du dispositif de pontage, la branche de commande comportant au moins un interrupteur commandé ;
- le au moins un interrupteur commandé de la branche de commande comporte un interrupteur commandé par un signal ;
- le au moins un interrupteur commandé de la branche de commande comporte un interrupteur commandé par le franchissement d'un seuil de température ;
- le au moins un interrupteur commandé de la branche de commande comporte un interrupteur commandé par le franchissement d'un seuil de pression ;
- le fusible comporte deux conducteurs coupe-circuit montés en parallèle, l'un de ces conducteurs coupe-circuit présentant une température de fusion supérieure à la température de fusion de l'autre conducteur coupe-circuit ;
- le dispositif comporte une résistance de décharge montée en parallèle du fusible ;
- la réserve de matière conductrice fusible est adaptée à se transférer à l'état liquide sur le dispositif de pontage par la gravité, et/ou sa tension de surface, et/ou une sollicitation électromagnétique, et/ou un appui mécanique élastique permanent, et/ou un appui mécanique thermoactivé.

### PRÉSENTATION DES FIGURES

D'autres caractéristiques et avantages de l'invention ressortiront de la description non limitative qui suit, en référence aux dessins annexés dans lesquels :
- La figure 1 est un premier exemple de circuit électrique selon l'invention ;
- La figure 2 est un deuxième exemple de circuit électrique selon l'invention ;
- La figure 3 est une vue schématique en coupe d'un dispositif d'isolement d'accumulateur selon un premier mode de réalisation de l'invention ;
- La figure 4 est une vue de dessus des conducteurs de pontage du dispositif de la figure 3 ;
- La figure 5 est une vue de dessus du fusible du dispositif de la figure 3 ;
- La figure 6 illustre le dispositif de la figure 3 après son déclenchement ;
- La figure 7 est une vue similaire à la figure 1 après le déclenchement du dispositif d'isolement ;
- La figure 8 est un troisième exemple de circuit électrique selon l'invention ;
- La figure 9 illustre un dispositif d'isolement d'accumulateur selon un deuxième mode de réalisation de l'invention ;
- La figure 10 illustre un dispositif d'isolement d'accumulateur selon un troisième mode de réalisation de l'invention ;
- La figure 11 illustre un dispositif d'isolement d'accumulateur selon un quatrième mode de réalisation de l'invention ;
- La figure 12 illustre un dispositif d'isolement d'accumulateur selon un cinquième mode de réalisation de l'invention ;
- La figure 13 illustre un dispositif d'isolement d'accumulateur selon un sixième mode de réalisation de l'invention ;
- La figure 14 illustre un dispositif d'isolement d'accumulateur selon un septième mode de réalisation de l'invention ;
- La figure 15 et la figure 16 illustrent un dispositif d'isolement d'accumulateur selon un huitième mode de réalisation de l'invention ;
- La figure 17, la figure 18 et la figure 19 illustrent un dispositif d'isolement d'accumulateur selon un neuvième mode de réalisation de l'invention ;
- La figure 20 illustre un dispositif d'isolement d'accumulateur selon un dixième mode de réalisation de l'invention ;
- La figure 21 illustre le dispositif de la figure 20 après son déclenchement ;
- La figure 22 est une vue de dessus des conducteurs de pontage d'un dispositif d'isolement d'accumulateur selon un onzième mode de réalisation de l'invention ;
- la figure 23 est une vue en coupe des éléments de la figure 22 ;
- la figure 24 est une vue similaire à la figure 23, après le déclenchement du dispositif d'isolement d'accumulateur ;
- La figure 25 illustre un dispositif d'isolement d'accumulateur selon un douzième mode de réalisation de l'invention ;
- la figure 26 illustre un dispositif d'isolement d'accumulateur selon un treizième mode de réalisation de l'invention.

### DESCRIPTION DÉTAILLÉE

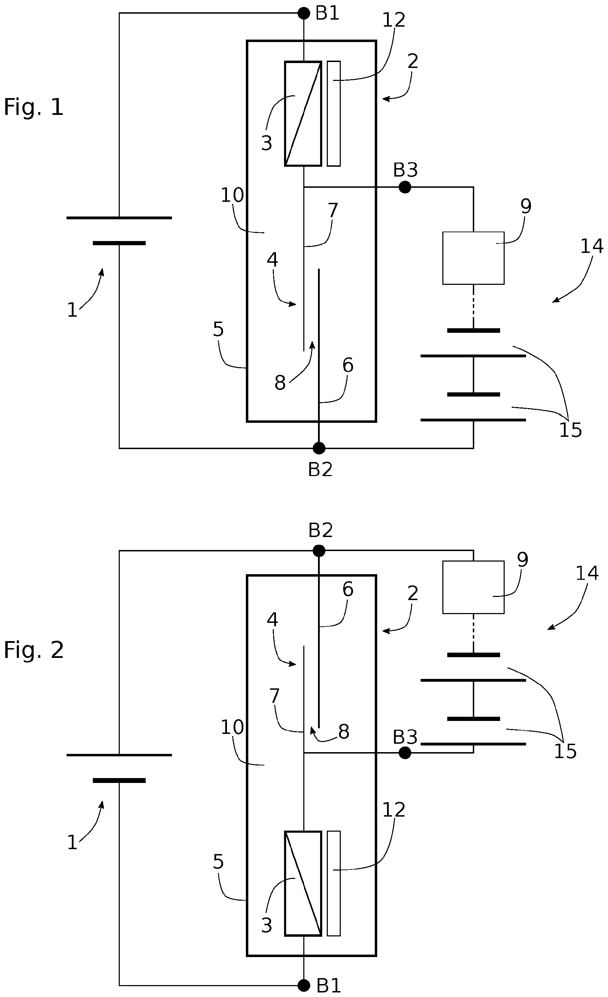

Les figures 1 et 2 illustrent schématiquement chacune un exemple de circuit électrique dans lequel une batterie d'accumulateurs électriques 1, 15 connectés en série alimentent une charge 9. La charge 9 illustre schématiquement un quelconque circuit ou machine électrique, alimenté par une batterie.

Les circuits illustrés aux figures 1 et 2 sont agencés pour que l'un des accumulateurs (ici l'accumulateur 1) soit associé à un dispositif 2 d'isolement d'accumulateur électrique. L'accumulateur électrique 1 peut être tout type d'accumulateur électrique connu, et notamment un accumulateur de type lithium-ion, ou relatif à d'autres chimies lithiums comme le lithium-métal, ou encore basés sur l'intercalation d'autres ions comme les chimies sodiums-ions ou potassiums-ions.

Cet accumulateur électrique 1 peut être un accumulateur unitaire (une cellule de batterie) ou un ensemble d'accumulateurs montés en série et/ou en parallèle. Quelle que soit la constitution de l'accumulateur 1, le montage illustré permet d'isoler cet accumulateur 1 du circuit électrique 14 auquel il est connecté, tout en assurant un pontage permettant aux autres accumulateurs 15 de continuer à alimenter la charge 9. Dans l'exemple illustré, le circuit électrique 14, constitué des autres accumulateurs 15 et de la charge 9, représente les éléments desquels l'accumulateur 1 peut être isolé en cas de défaut de ce dernier.

Le dispositif d'isolement 2 comporte :
- une première borne B1 qui est connectée à une première borne de l'accumulateur 1 ;
- une deuxième borne B2 qui est connectée à l'autre borne de l'accumulateur 1 et au circuit électrique 14 ; et
- une troisième borne B3 qui est reliée au circuit électrique 14.

Les fonctions remplies par le dispositif d'isolement 2 sont les suivantes :
- coupure entre l'accumulateur 1 et le circuit électrique 14 (schématisée par un fusible 3) ;
- pontage des bornes B2 et B3 (schématisé par un dispositif de pontage 4 et une réserve de matière conductrice fusible 12).

La figure 1 illustre un exemple dans lequel la borne B1 est reliée à la borne positive de l'accumulateur 1, et la borne B2 est reliée à la borne négative de l'accumulateur 1 (isolement de l'accumulateur 1 par coupure de sa borne positive).

La figure 2 illustre quant à elle un exemple dans lequel la borne B1 est reliée à la borne négative de l'accumulateur 1, et la borne B2 est reliée à la borne positive de l'accumulateur 1 (isolement de l'accumulateur 1 par coupure de sa borne négative).

Le dispositif d'isolement 2 peut être un dispositif externe à l'accumulateur 1, et connecté à ce dernier, ou peut être interne au boitier de l'accumulateur 1, ou encore interne au pack batterie contenant l'ensemble des accumulateurs 1, 15.

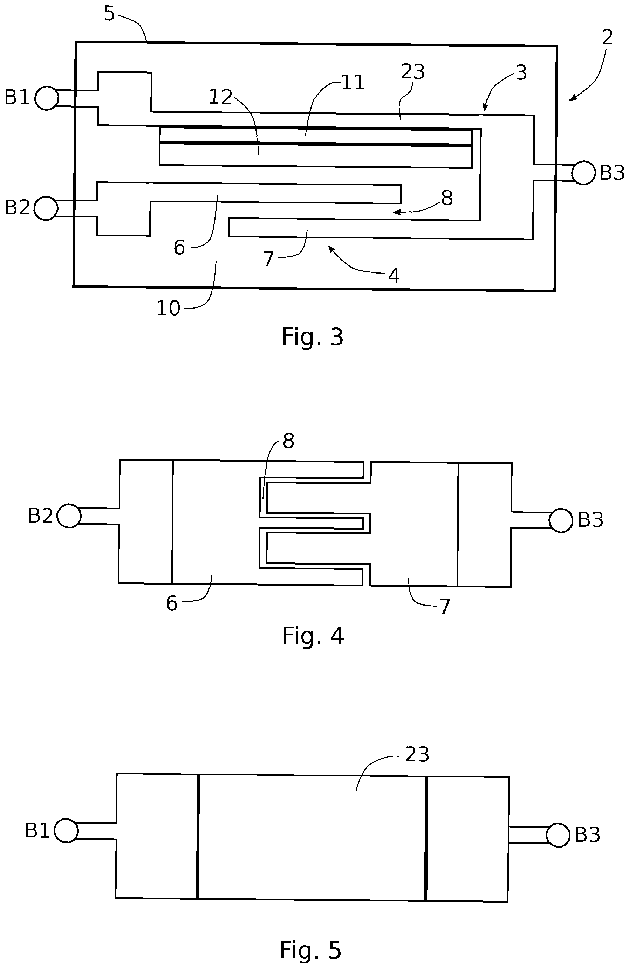

La figure 3 illustre schématiquement le dispositif d'isolement 2 selon un premier mode de réalisation. Selon ce premier mode de réalisation, le dispositif d'isolement 2 est déclenché par une surintensité au niveau des bornes B1 et B3. Le dispositif d'isolement 2 comporte ici un boitier 5 supportant les bornes de connexion B1, B2, B3 qui définit un espace interne constituant une chambre de pontage 10, dans laquelle est disposé un dispositif de pontage 4. Le dispositif de pontage 4 comporte un premier conducteur de pontage 6 et un deuxième conducteur de pontage 7, séparés par au moins un interstice 8. Une réserve de matière conductrice fusible 12 est de plus disposée dans la chambre de pontage 10.

Le premier conducteur de pontage 6 est relié à la borne B2, tandis que le deuxième conducteur de pontage 7 est relié à la borne B3. Dans l'état nominal de fonctionnement du dispositif d'isolement 2, c'est-à-dire lorsqu'il n'est pas déclenché, l'interstice 8 est comblé par un isolant électrique qui est, dans le présent exemple, de l'air ou tout autre gaz adapté.

La figure 3 est une représentation schématique dans laquelle l'interstice 8 est un simple écart entre les deux conducteurs de pontage 6, 7.

La réserve de matière conductrice fusible 12 est destinée, après fusion, à combler au moins partiellement l'interstice 8. Le matériau de cette réserve de matière conductrice fusible 12 est électriquement conducteur de sorte que l'occupation de l'interstice 8 par ce matériau conduit à une liaison électrique entre les deux conducteurs de pontage 6,7. La forme et le volume de la réserve de matière conductrice fusible 12 sont adaptés à présenter une quantité de matériau fusible suffisante en vis-à-vis des conducteurs de pontage 6, 7 et plus précisément en vis-à-vis de l'interstice 8.

La figure 4 illustre schématiquement les conducteurs de pontage 6, 7 vus du dessus, et qui comportent chacun, dans cet exemple, une extrémité présentant des motifs géométriques complémentaires, ces motifs étant imbriqués, bien que séparés par l'interstice 8. L'interstice 8 est alors disposé le long de ces motifs géométriques, selon une forme crènelée, dans cet exemple.

Un fusible 3 est également disposé dans la chambre de pontage 10. Ce fusible 3 comporte, dans cet exemple, un conducteur coupe-circuit 23 qui est relié d'une part à la borne B1 et d'autre part à la borne B3 (et donc également au deuxième conducteur de court-circuit 7). Le conducteur coupe-circuit 23 est par exemple un conducteur en matériau fusible adapté à ouvrir le circuit lorsque qu'une élévation de température au-delà d'un seuil provoque sa fusion. Le conducteur coupe-circuit 23 peut être réalisé par tout élément prévu pour s'échauffer lorsqu'il est question pour le fusible d'exercer sa fonction coupe-circuit. Le fusible 3 peut par ailleurs être constitué d'une mise en parallèle de différentes sections fusibles.

La figure 5 est une vue de dessus du fusible 3. La représentation schématique de la figure 5 illustre le fait que le conducteur coupe-circuit 23 est destiné à transmettre de la chaleur à la réserve de matière conductrice fusible 12, grâce ici à une aire comparable à l'aire de la réserve de matière conductrice fusible 12 qui va être placée en vis-à-vis.

Un isolant électrique thermoconducteur 11 est de plus disposé dans la chambre de pontage 10, entre le fusible 3 et la réserve de matière conductrice fusible 12. Dans le présent exemple, cet isolant électrique thermoconducteur 11 est illustré sous forme d'une feuille de matériau diélectrique qui permet de transmettre la chaleur du conducteur coupe-circuit 23 vers la réserve de matière conductrice fusible 12.

L'isolant électrique 11 est dit « thermoconducteur » lorsque sa conductivité thermique est supérieure à 0,1 watt par mètre-kelvin.

Le conducteur coupe-circuit 23 est constitué d'un matériau présentant un point de fusion choisi pour être atteint lors d'une surintensité dépassant une valeur prédéterminée, de manière à assurer une fonction de fusible classique. Ainsi, en cas par exemple de court-circuit affectant l'accumulateur 1, la fusion du conducteur coupe-circuit 23 dans le fusible 3 ouvre le circuit.

Cependant, le fusible 3 est ici agencé de sorte que la chaleur produite et le niveau de température atteint lors de sa fusion soit transmise par l'isolant électrique thermoconducteur 11 à la réserve de matière conductrice fusible 12 et provoque la fusion de cette dernière. Le volume de matériau constituant la réserve de matière conductrice fusible 12 vient combler au moins partiellement l'interstice 8, lors de la fusion de la réserve de matière conductrice fusible 12.

La réserve de matière conductrice fusible 12 est de préférence réalisée par un matériau à bas point de fusion (par exemple inférieur à 400° C), ce qui est le cas par exemple d'un alliage plomb-étain ou des alliages sans plomb qui les remplacent pour les brasures.

Le matériau constituant le conducteur coupe-circuit 23 est un matériau dont le point de fusion est supérieur à celui du matériau de la réserve de matière conductrice fusible 12 pour permettre la fusion de la réserve de matière conductrice fusible 12 par la chaleur transmise à travers l'isolant électrique thermoconducteur 11. Ce matériau constituant le conducteur coupe-circuit 23 peut être par exemple du cuivre, de l'aluminium ou un alliage d'étain de température de fusion supérieure à celle de la réserve de matière conductrice fusible 12.

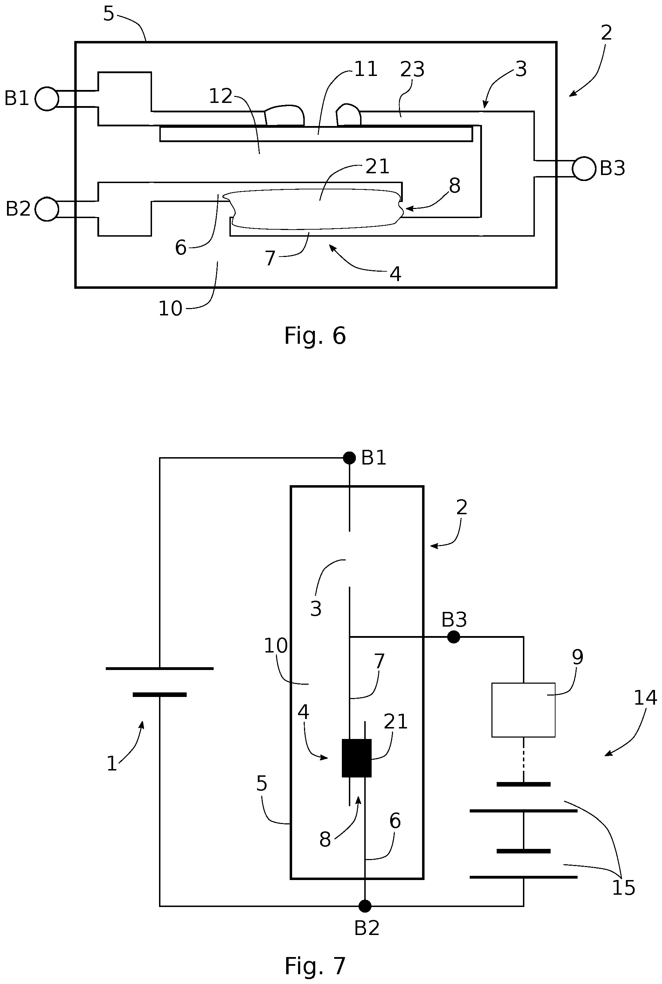

La figure 6 illustre le dispositif d'isolement 2 de la figure 3, après son déclenchement, c'est-à-dire dans une configuration d'isolement de l'accumulateur 1. Le dispositif d'isolement 2 est déclenché par le franchissement d'un seuil d'intensité qui est calibré de manière classique par le dimensionnement de la section et le choix du matériau du fusible 3. Dans le cadre d'une application automobile électrique, par exemple, ce seuil d'intensité est de l'ordre de plusieurs centaines d'ampères.

Le courant en surintensité traversant le fusible 3 provoque l'échauffement du conducteur coupe-circuit 23 jusqu'à la fusion du matériau fusible le constituant. La chaleur générée par le conducteur coupe-circuit 23 traverse auparavant l'isolant électrique thermoconducteur 11 et provoque la fusion de la réserve de matière conductrice fusible 12 qui, à l'état liquide, vient se déposer au niveau de l'interstice 8 et vient constituer une brasure 21 sur les conducteurs de pontage 6, 7.

Dans le présent exemple, le transfert de la réserve de matière conductrice fusible 12 sur les conducteurs de pontage 6, 7 est réalisée par gravité, les conducteurs de pontage 6, 7 étant physiquement situés sous la réserve de matière conductrice fusible 12. D'autres exemples de moyens et d'agencements permettant le transfert de la réserve de matière conductrice fusible 12 sur les conducteurs de pontage 6, 7 sont donnés par la suite en références aux autres modes de réalisation.

De préférence, l'état de surface des conducteurs de pontage 6, 7 est préparé (par un traitement de surface, un étamage, ou toute autre mesure adaptée) pour faciliter l'adhésion du matériau de la réserve de matière conductrice fusible 12 à l'état liquide.

La fusion du fusible 3 a donc pour conséquences indissociables :
- la coupure du circuit électrique entre les bornes B1 et B3 ;
- l'établissement d'une connexion électrique de pontage, à très faible résistance, entre les bornes B2 et B3.

Le boitier 5 qui délimite la chambre de pontage 10 est réalisé dans un matériau résistant aux températures du matériau du conducteur coupe-circuit 23 lors de sa fusion et à celle de la réserve de matière conductrice fusible 12 lorsqu'elle est à l'état liquide. Le boitier 5 peut être réalisé par exemple à partir d'une céramique réfractaire résistant à de très hauts niveaux de température si nécessaire. Dans le présent exemple, le matériau de la réserve de matière conductrice fusible 12 étant à bas point de fusion, et le matériau du conducteur coupe-circuit 23 du fusible 3 pouvant l'être de même, par exemple en utilisant de l'aluminium, ou un alliage d'étain, le boitier 5 est de préférence réalisé dans un polymère adapté, par exemple en polyimide. L'isolant électrique thermoconducteur 11 peut être également réalisé en polyimide.

Le circuit équivalent (en reprenant l'exemple de la figure 1) dans lequel s'inscrit le dispositif d'isolement 2 une fois déclenché, est illustré à la figure 7. Dans cette configuration d'isolement, l'accumulateur 1 est maintenant isolé du circuit par la déconnexion de sa borne positive, tandis que le circuit électrique 14 est refermé par la brasure 21, de sorte que les autres accumulateurs électriques 15, précédemment présents sur la même branche en série avec l'accumulateur 1, restent connectés en série et restent connectés avec la charge 9.

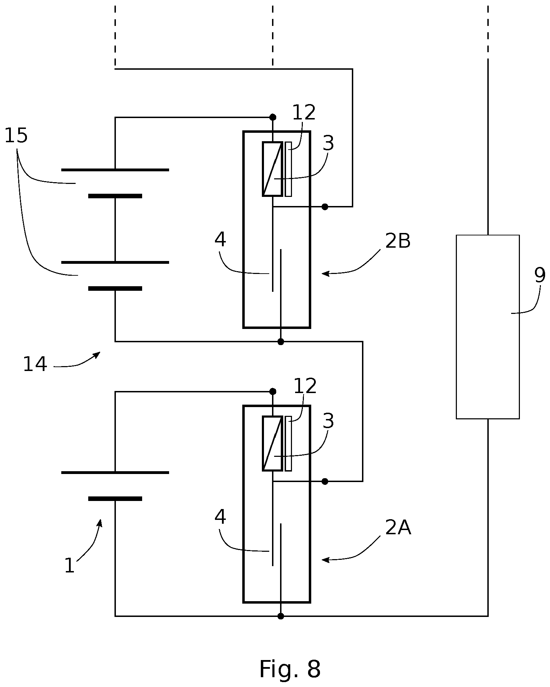

Le dispositif d'isolement 2 agit ici sur l'accumulateur 1. Tous les accumulateurs, ou groupes d'accumulateurs, d'une branche série ou parallèle, peuvent être associés à leur propre dispositif d'isolement. La figure 8 illustre un exemple où l'accumulateur 1 est associé à son dispositif d'isolement 2A, et où un groupe constitué des autres accumulateurs 15 est associé à son propre dispositif d'isolement 2B.

Les accumulateurs ou groupes d'accumulateurs peuvent être ainsi montés en série dans un pack batterie, avec autant de dispositifs d'isolement 2 que nécessaire, en vue d'alimenter la charge 9. La défaillance de l'un des accumulateurs va déclencher son dispositif d'isolement 2 et entrainer l'isolement de cet accumulateur comme décrit précédemment.

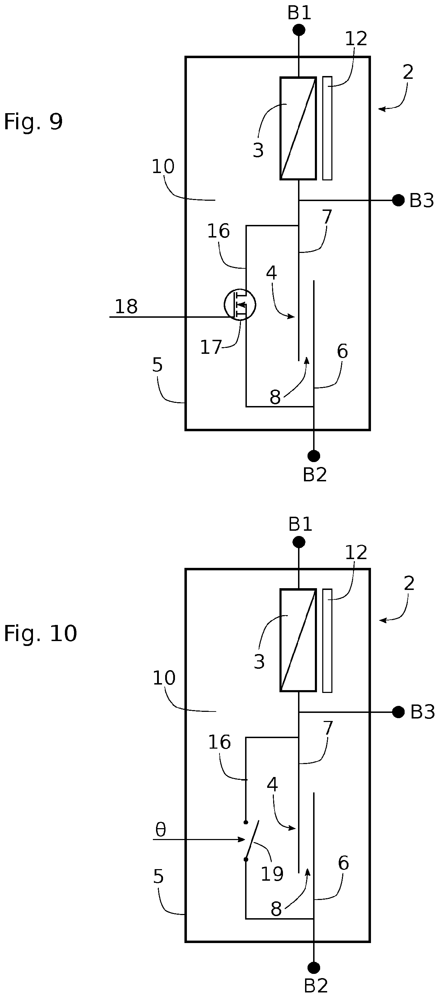

La figure 9 illustre un dispositif d'isolement 2 d'accumulateur électrique selon un deuxième mode de réalisation de l'invention. Dans les différents modes de réalisation, les éléments similaires portent les mêmes numéros de renvoi aux figures.

Selon ce deuxième mode de réalisation, le dispositif d'isolement 2 est constitué de manière similaire au dispositif d'isolement du premier mode de réalisation, si ce n'est qu'à l'intérieur du boitier 5, le dispositif d'isolement 2 comporte une branche de commande 16 connectée en parallèle du dispositif de pontage 4, entre les bornes B2 et B3.

Selon ce deuxième mode de réalisation, le dispositif d'isolement 2 peut non seulement être déclenché de manière naturelle (par une surintensité comme décrit pour le premier mode de réalisation), mais également de manière pilotée. Le pilotage du déclenchement du dispositif d'isolement peut être par exemple réalisé par l'électronique de contrôle du pack batterie (BMS pour « Battery Management System », en anglais) lorsqu'il identifie un défaut concernant l'accumulateur (température trop élevée ou autres paramètres contrôlés).

La branche de commande 16 comporte un interrupteur commandé tel qu'un relai ou, comme dans l'exemple illustré, un transistor de puissance 17. Le transistor 17 est par exemple un transistor MOSFET, qui présente une très faible résistance parasite et qui est apte à laisser passer des courants de plusieurs centaines d'ampères, compatibles avec la fusion du fusible 3.

La commande 18 du transistor 17 reçoit ainsi un signal correspondant à une instruction d'isolement et entraine la fermeture de la branche de commande 16, ce qui met l'accumulateur 1 en court-circuit et déclenche ainsi le dispositif d'isolement 2 comme décrit précédemment dans le cadre du premier mode de réalisation.

Après le déclenchement du dispositif d'isolement 2, si le transistor 17 est détruit par le courant de court-circuit, dans un premier temps, il est classiquement conducteur, mais n'est plus apte à interrompre le courant, il peut donc néanmoins continuer à laissez-passer ce courant pendant un certain temps. Quoi qu'il en soit, la situation résultant du déclenchement du dispositif d'isolement 2 suite à une commande 18 résulte dans un schéma équivalent correspondant à la figure 7.

Selon ce deuxième mode de réalisation, le dispositif d'isolement présente ainsi :
- un premier mode de déclenchement suite à une surintensité, comme dans le premier mode de réalisation ;
- un deuxième mode de déclenchement commandé par un signal sur la commande 18.

La figure 10 illustre un troisième mode de réalisation qui est similaire au deuxième mode de réalisation, si ce n'est que la branche de commande 16 est ici une branche de commande en température θ.

La branche de commande 16 comporte ici un interrupteur thermique 19 qui est un interrupteur normalement ouvert se fermant lorsque la température θ dépasse un seuil prédéterminé. Selon ce troisième mode de réalisation, le dispositif d'isolement 2 présente ainsi deux modes de déclenchement :
- un premier mode de déclenchement identique à celui du premier mode de réalisation ;
- un deuxième mode de déclenchement intervenant lorsque la température de l'accumulateur 1 (ou d'un autre élément couplé thermiquement au dispositif d'isolement 2) dépasse un certain seuil.

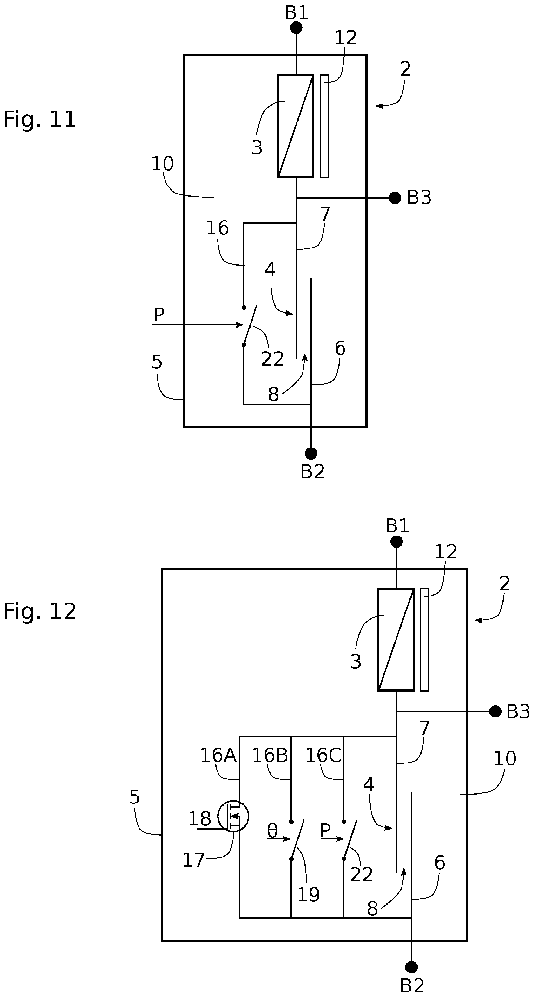

La figure 11 illustre un quatrième mode de réalisation de l'invention qui est similaire au troisième mode de réalisation, si ce n'est que la branche de commande 16 est relative à une commande en pression P.

La branche de commande 16 comporte ici un interrupteur de pression 22 qui est un interrupteur normalement ouvert se fermant lorsque la pression P dépasse un seuil prédéterminé. Selon ce quatrième mode de réalisation, le dispositif d'isolement 2 présente ainsi deux modes de déclenchement :
- un premier mode de déclenchement identique à celui du premier mode de réalisation ;
- un deuxième mode de déclenchement intervenant lorsque la pression interne de l'accumulateur 1 (ou d'un autre élément mécaniquement couplé, du point de vue de la pression, avec le dispositif d'isolement 2) dépasse un certain seuil.

La figure 12 illustre un dispositif d'isolement 2 selon un cinquième mode de réalisation de l'invention, correspondant à une combinaison des modes de réalisation précédents.

Le dispositif d'isolement 2 comporte ici, montées en parallèle du dispositif de pontage 4 :
- une première branche de commande 16A par un signal de commande 18 ;
- une deuxième branche de commande 16B en température, avec un interrupteur 19 commandé en température θ ;
- une troisième branche de commande 16C en pression, avec un interrupteur 22 commandé en pression P.

Selon ce cinquième mode de réalisation, le dispositif d'isolement 2 présente ainsi quatre modes de déclenchement :
- un premier mode de déclenchement suite à une surintensité, comme dans le premier mode de réalisation ;
- un deuxième mode de déclenchement commandé par un signal sur la commande 18, comme dans le deuxième mode de réalisation ;

- un troisième mode de déclenchement intervenant lorsque la température de l'accumulateur 1 (ou d'un autre élément couplé thermiquement au dispositif d'isolement 2) dépasse un certain seuil, comme dans le troisième mode de réalisation ;
- un quatrième mode de déclenchement intervenant lorsque la pression interne de l'accumulateur 1 (ou d'un autre élément mécaniquement couplé, du point de vue de la pression, avec le dispositif d'isolement 2) dépasse un certain seuil, comme dans le quatrième mode de réalisation.

Le dispositif d'isolement 2 peut par ailleurs être complété par toute autre branche de commande 16 comportant un interrupteur adapté à se fermer suivant un paramètre physique particulier qui serait pertinent dans la détection d'un défaut de l'accumulateur 1, pour une application particulière.

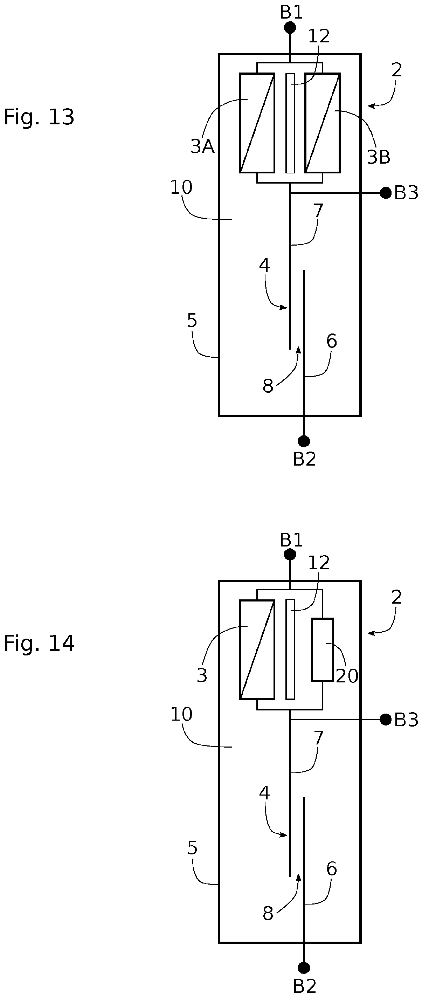

La figure 13 illustre un dispositif d'isolement selon un sixième mode de réalisation de l'invention dans lequel la fonction du fusible 3 est réalisée par deux fusibles 3A, 3B en parallèle, ou plus.

Le premier fusible 3A et le deuxième fusible 3B comportent chacun de manière similaire un conducteur coupe-circuit. Par exemple, le conducteur coupe-circuit du premier fusible 3A présente une température de fusion qui est inférieure à la température de fusion du conducteur coupe-circuit du deuxième fusible 3B, ou le conducteur coupe-circuit du premier fusible 3A présente une longueur qui est inférieure à celle du conducteur coupe-circuit du deuxième fusible 3B. Les deux fusibles 3A, 3B sont couplés thermiquement avec l'isolant électrique thermoconducteur 11 et la réserve de matière conductrice fusible 12. Ils peuvent être simplement disposés ensemble dans la chambre de pontage 10, ou peuvent comporter des éléments spécifiquement prévus pour le couplage thermique.

Lors du déclenchement du dispositif d'isolement 2, suite à une surintensité, l'apport de chaleur pour la fusion de la réserve de matière conductrice fusible 12, le brasage des conducteurs de pontage 6, 7, et le comblement de l'interstice 8, est réalisé en deux temps. L'échauffement des deux fusibles 3A, 3B, suite à la surintensité, provoque tout d'abord la fusion du premier fusible 3A et la génération d'une quantité de chaleur, puis la génération de celle-ci se poursuit même au-delà de la rupture du conducteur coupe-circuit du fusible 3A, sous l'effet de l'échauffement concomitant du fusible 3B.

À partir du point de fusion du conducteur coupe-circuit du deuxième fusible 3B, ce dernier passe également à l'état liquide et la fonction d'isolement de l'accumulateur 1 est alors remplie.

Cet agencement garantit que, lors de la fusion du fusible 3, la chaleur générée soit suffisante pour assurer la fusion de la réserve de matière conductrice fusible 12, sans inconvénients relatifs à une rupture prématurée qui interromprait la montée en température et la fusion de la réserve de matière conductrice fusible 12.

La figure 14 illustre un septième mode de réalisation de l'invention, dans lequel une résistance de décharge 20 est disposée dans le boitier 5, en parallèle du fusible 3.

Selon ce septième mode de réalisation, lors du déclenchement du dispositif d'isolement 2, l'accumulateur 1 est bien isolé par la fusion du fusible 3A. Cependant, les bornes de l'accumulateur 1 se retrouvent alors, à l'issue du déclenchement, connectées à la résistance de décharge 20. L'accumulateur 1 se décharge alors dans la résistance 20.

Ce mode de réalisation apporte une sécurité supplémentaire du fait de la décharge de l'accumulateur présentant une anomalie, dans la résistance de décharge 20. L'accumulateur en défaut est ainsi non seulement isolé du circuit mais est de plus déchargé de l'énergie qu'il contient.

La résistance de décharge 20 est dimensionnée en fonction de la quantité d'énergie maximale à décharger de l'accumulateur 1, et de la durée souhaitée pour la décharge. La valeur de la résistance de décharge 20 dépend également des possibilités d'évacuation de la chaleur générée. Cette résistance de décharge 20 peut par exemple être dimensionnée pour une décharge lente de l'accumulateur, générant un échauffement limité, et adaptée à des configurations d'évacuation difficile de la chaleur générée. La résistance de décharge 20 peut au contraire être dimensionnée pour une décharge plus rapide, générant un important échauffement. Dans ce dernier cas, la température d'échauffement de la résistance de décharge 20 est mise à profit pour poursuivre l'échauffement de la réserve de matière conductrice fusible 12 au-delà de sa température de fusion, et ainsi garantir un transfert complet de matière en fusion vers le dispositif de pontage 4. La résistance de décharge 20 complète alors l'apport de chaleur du fusible 3.

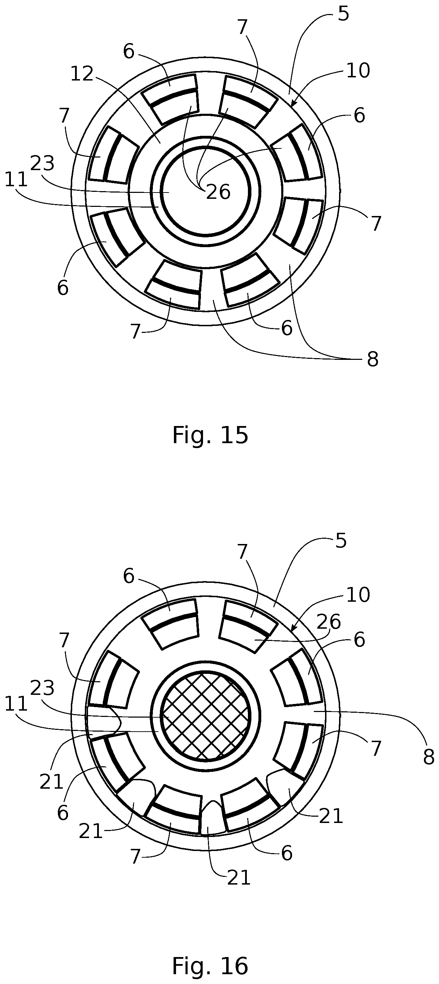

Les figures 15 et 16 illustrent un huitième mode de réalisation de l'invention dans lequel la réserve de matière conductrice fusible 12 est adaptée, lorsqu'elle est à l'état liquide, à couler par gravité sur les conducteurs de pontage 6, 7 quelle que soit la position du dispositif d'isolement. À cet effet, les conducteurs de pontage 6, 7 sont agencés tout autour de la réserve de matière conductrice fusible 12, sous forme de doigts alternés, et la réserve de matière conductrice fusible 12 est agencée autour du fusible 3.

En référence à la figure 15, le conducteur coupe-circuit 23 est agencé sous forme d'un noyau cylindrique central. Optionnellement, le conducteur coupe-circuit 23 peut être un cylindre monté sur un noyau central. L'isolant électrique thermoconducteur 11 présente quant à lui une forme de cylindre ajusté sur le conducteur coupe-circuit 23. La réserve de matière conductrice fusible 12 présente également une forme de cylindre ajusté sur l'isolant électrique thermoconducteur 11.

Un isolant électrique perméable 26 est de plus prévu entre la réserve de matière conductrice fusible 12 et les conducteurs de pontage 6, 7. L'isolant électrique perméable 26 est ici un cylindre de matériau diélectrique qui est perforé ou poreux, adapté à laisser passer le matériau de la réserve de matière conductrice fusible 12, lorsque ce matériau est à l'état liquide suite à sa fusion sous l'effet de la chaleur apportée par le conducteur coupe-circuit 23 à travers l'isolant électrique thermoconducteur 11.

Le conducteur coupe-circuit 23 peut fondre et couper le circuit lorsqu'il est parcouru par un courant supérieur à son courant de seuil. L'échauffement de ce conducteur coupe-circuit 23 se transmet à la réserve de matière conductrice fusible 12, à travers l'isolant électrique thermoconducteur 11, et provoque la fusion de la réserve de matière conductrice fusible 12. La figure 16 illustre le dispositif une fois déclenché (le conducteur coupe-circuit 23 est représenté hachuré pour schématiser sa coupure).

La réserve de matière conductrice fusible 12 à l'état liquide coule par gravité, au moins à travers une portion angulaire de l'isolant électrique perméable 26, pour venir créer une brasure dans une portion de l'interstice 8, entre certains des doigts des conducteurs de pontage 6 et 7.

Grâce au caractère cylindrique du dispositif, quelle que soit la position dans l'espace du dispositif d'isolement, le matériau de la réserve de matière conductrice fusible 12 à l'état liquide peut ainsi passer entre les trous de l'isolant électrique perméable 26 et venir créer la brasure 21 entre les conducteurs de pontage 6 et 7.

Le dispositif comporte ici un boitier 5 rigide, également cylindrique, qui permet notamment de contenir le matériau de la réserve de matière conductrice fusible 12 à l'état liquide.

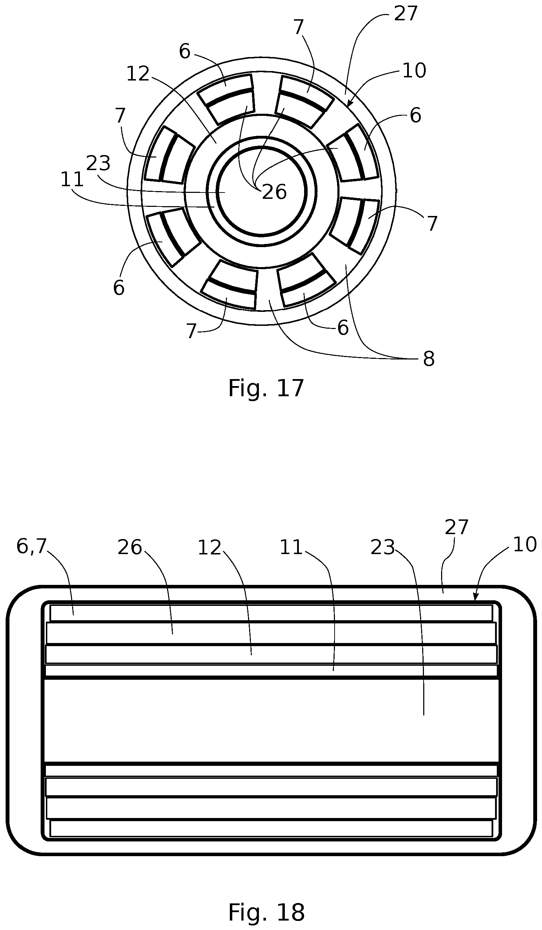

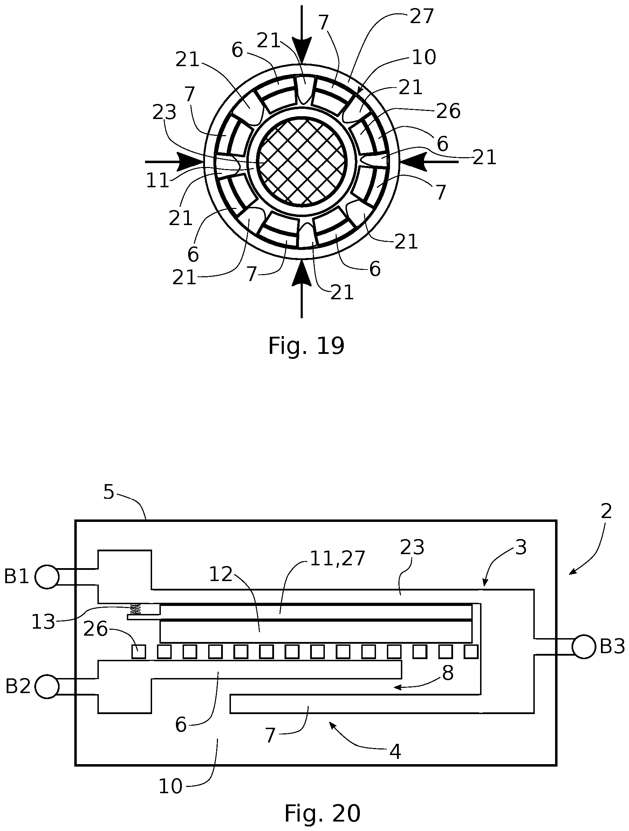

Les figures 17, 18 et 19 illustrent un neuvième mode de réalisation dans lequel le boitier 5 est remplacé par un tampon 27 adapté à solliciter la réserve de matière conductrice fusible 12 en direction des conducteurs de pontage 6, 7. La figure 17 est une vue en coupe transversale du dispositif, similaire à la vue de la figure 15, la figure 18 est une vue en coupe longitudinale du dispositif, et la figure 19 est une vue en coupe transversale du dispositif une fois déclenché. Dans cet exemple, le tampon 27 présente la même forme cylindrique que le boitier 5 de la figure 15, mais ce tampon 27 est ici rétractable, et mobile entre une position d'expansion (celle de la figure 17), et une position de rétractation (celle de la figure 19) dans laquelle le tampon 27 comprime le dispositif de sorte que la réserve de matière conductrice fusible 12 soit sollicitée en direction des conducteurs de pontage 6, 7.

Le tampon 27, qui est ici en forme de membrane fermée, permet le transfert de la réserve de matière conductrice fusible 12 sur les conducteurs de pontage 6, 7 en complément ou à la place de la gravité. Sur la figure 19, le conducteur coupe-circuit 23 est illustré hachuré pour schématiser sa coupure par fusion.

La rétractation du tampon 27 peut avoir lieu grâce à des propriétés élastiques du tampon 27, comprimé par une fonction ressort, ou des propriétés thermorétractables, permettant au tampon 27 de se rétracter sous l'effet de la chaleur apportée par la réserve de matière conductrice fusible 12 à l'état liquide. Par exemple, le tampon 27 peut être réalisé avec une gaine silicone thermorétractable.

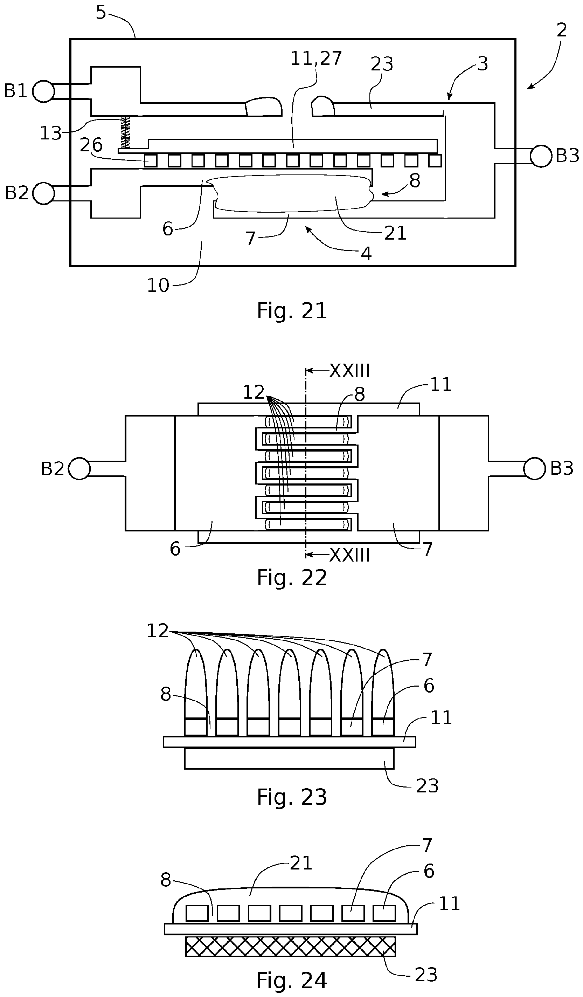

Les figures 20 et 21 illustrent un dixième mode de réalisation de l'invention. Ces vues sont similaires aux figures 3 et 6, si ce n'est que l'isolant électrique thermoconducteur 11 réalise de plus la fonction de tampon 27 sollicitant la réserve de matière conductrice fusible 12 vers les conducteurs de pontage 6, 7.

L'isolant électrique thermoconducteur 11, la réserve de matière conductrice fusible 12, et un isolant électrique perméable 26 sont empilés et ajustés entre le fusible 3 et le dispositif de pontage 4. L'isolant électrique thermoconducteur 11, assurant la fonction de tampon 27, est sollicité par un élément élastique (ressort ou autre) en direction du dispositif de pontage 4.

De même que pour les huitième et neuvième modes de réalisation, un isolant électrique perméable 26 est disposé dans la chambre de pontage 10, entre la réserve de matière conductrice fusible 12 et le dispositif de pontage 4. Dans le présent exemple, cet isolant électrique perméable 11 est illustré sous forme d'une feuille de matériau diélectrique qui est perforée ou poreuse, de sorte qu'elle est adaptée à laisser passer le matériau de la réserve de matière conductrice fusible 12, lorsque ce matériau est à l'état liquide suite à sa fusion provoquée par l'apport de chaleur du fusible 3.

La figure 21 représente le dispositif de la figure 20 après déclenchement : le conducteur coupe-circuit 23 est rompu par fusion, et la réserve de matière conductrice fusible 12 a été transférée à l'état liquide au dispositif de pontage 4, à travers l'isolant perméable 26, sous l'effet de la poussée de l'isolant électrique thermoconducteur 11, assurant la fonction de tampon 27. Ce tampon 27 vient compléter l'effet de la gravité, ou le remplacer (ce qui permet d'utiliser le dispositif dans une quelconque orientation).

Les figures 22, 23 et 24 illustrent un onzième mode de réalisation de l'invention dans lequel la réserve de matière conductrice fusible 12 est agencée sous forme d'au moins un amas rapporté sur au moins l'un des conducteurs de pontage 6, 7, et adapté à se répandre dans l'interstice 8 lorsque la réserve de matière conductrice fusible 12 est à l'état liquide. La réserve de matière conductrice fusible 12 est ici au contact ou déposée sur au moins l'un des conducteurs de pontage 6, 7. Dans l'exemple illustré, la réserve de matière conductrice fusible 12 est constituée d'un amas de brasure solide déposé sur chaque conducteur de pontage 6, 7.

La figure 22 est une vue de dessous des conducteurs de pontage 6, 7 revêtus chacun (dans cet exemple) de matériau fusible conducteur.

La figure 23 est une vue en coupe XXIII-XXIII de la figure 22. De manière préférée, la hauteur du dépôt de matériau fusible conducteur est supérieur à l'espacement de l'interstice 8 entre les conducteurs de pontage 6, 7 pour que lors de la fusion de la réserve de matière conductrice fusible 12, les forces de capillarité diminuent cette hauteur et augmentent la largeur et de ce fait provoquent un pontage entre les conducteurs de pontage 6, 7.

La figure 24 est une vue similaire à la figure 23, après fusion de la réserve de matière conductrice fusible 12. Le conducteur coupe-circuit 23 est représenté hachuré pour schématiser sa rupture par fusion. Les amas de matériau fusible constituant la réserve de matière conductrice fusible 12 se rejoignent dans cet exemple par capillarité, sans nécessiter l'action de la gravité ou d'un tampon.

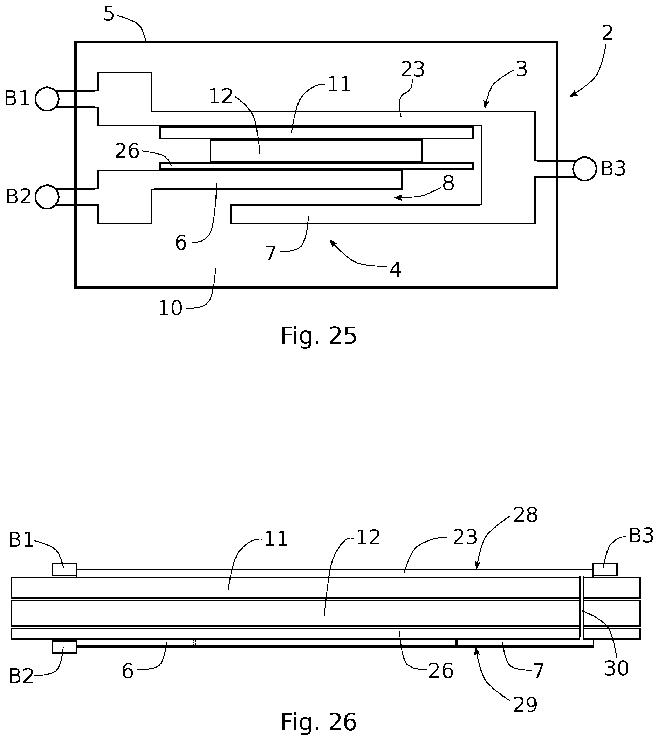

La figure 25 illustre un douzième mode de réalisation de l'invention où la réserve de matière conductrice fusible 12 est isolée électriquement des conducteurs de pontage 6, 7 par un isolant thermique perméable 26 de même que dans les modes de réalisation précédents. Cependant, l'isolant thermique perméable 26 tire dans cet exemple son caractère perméable du fait qu'il est fusible car constitué d'un matériau à bas point de fusion, de type polyester par exemple. L'apport de chaleur issu de la fusion du conducteur coupe-circuit 23 provoque la fusion de cet isolant thermique perméable 26 qui est donc également fusible. L'isolant thermique perméable 26, une fois fondu, met donc la réserve de matière conductrice fusible 12 au contact des conducteurs de pontage 6, 7 qu'elle court-circuite. La qualité du court-circuit augmente ensuite par la fusion de la réserve de matière conductrice fusible 12 et le brasage des conducteurs de pontage 6, 7. L'avantage de cette variante de réalisation est de pouvoir utiliser une feuille de matériau fusible conducteur pour constituer la réserve de matière conductrice fusible 12, plutôt que de devoir déposer ce matériau ou de le découper selon la forme des conducteurs de pontage 6, 7.

La figure 26 illustre un mode de réalisation préféré de l'invention utilisant les processus de fabrication des circuits imprimés. Le dispositif d'isolement dans son ensemble est réalisé sous forme de circuit imprimé souple à base de polyimide (pour constituer l'isolant électrique thermoconducteur), sur lequel sont gravées des pistes conductrices en cuivre 28 pour réaliser le fusible 3 et des pistes conductrices en cuivre étamé 29 pour réaliser des conducteurs de pontage 6, 7 inter-digités. L'étamage permet de protéger le cuivre et de faciliter la brasure.

Ces pistes 28, 29 comportent des vias 30 (ou tout autre moyen de pontage) pour créer les continuités souhaitées entre les bornes B1, B2, B3. L'isolant électrique perméable 26, par exemple en polyester, est placé sous forme de couche sur les pistes des conducteurs de pontage. Comme pour le douzième mode de réalisation, cet isolant électrique perméable 26 est ici rendu perméable lors de sa fusion.

Un feuillard d'un alliage d'étain est placé sur l'isolant électrique perméable 26 pour constituer la réserve de matière conductrice fusible 12.

L'ensemble de ces couches ou feuilles de matériau est disposé dans la chambre de pontage, qui peut être délimitée par un boitier renfermant l'ensemble.

Un dispositif d'isolement selon l'invention peut ainsi être produit sous forme compacte, avec les mêmes outils de grande série qui sont disponibles dans le domaine de l'électronique, en profitant des avantages liés en ce qui concerne notamment les cadences et les coûts de production.

Des variantes de réalisation peuvent être mises en œuvre. Notamment, toute forme d'imbrication des conducteurs de pontage 6, 7 peut être prévue, notamment en fonction de la section conductrice nécessitée pour l'interstice 8, lorsque ce dernier est comblé par le matériau de la réserve de matière conductrice fusible 12. Le conducteur coupe-circuit 23 peut être disposé en vis-à-vis du dispositif de pontage 4, comme dans l'exemple de la figure 3, mais ces éléments peuvent aussi être disposés dans tout autre agencement permettant un transfert du matériau à l'état liquide de la réserve de matière conductrice fusible 12 sur le dispositif de pontage 4 (par exemple par des éléments canalisant ce matériau à l'état liquide, et/ou en bénéficiant d'effets de gravité, de capillarité, de tension superficielle de l'état liquide et/ou de l'application d'une force extérieure qui peut être appliquée sur la réserve de matière conductrice fusible 12 à l'état liquide par autre chose qu'un tampon, par exemple par un piston associé à des conduits hydrauliques).

Différentes solutions sont donc possibles pour l'application de la force faisant migrer la matière fondue de la réserve de matière conductrice fusible 12. La réserve de matière conductrice fusible 12 est en effet adaptée à se transférer à l'état liquide sur le dispositif de pontage 4 sous l'effet d'un élément de transfert. Différents exemples de cet élément de transfert sont listés ci-après.

L'exemple le plus simple de cet élément de transfert est la gravité, qui peut être utilisée lorsqu'au moins une portion du dispositif de pontage 4 est située en dessous de la réserve de matière conductrice fusible 12, comme dans les modes de réalisation des figures 3 et 15.

Selon un autre exemple dudit élément de transfert, l'élément de transfert est un tampon 27 rigide poussé par un élément élastique 13, comme dans le mode de réalisation de la figure 20.

Selon un autre exemple dudit élément de transfert, plutôt que d'avoir un tampon rigide poussé par un élément élastique, on peut avoir un tampon en forme de membrane poussée par un matériau élastique (par exemple une mousse), voire un tampon en forme de membrane élastique qui est maintenue déformée par la matière solide du fusible, et qui reprend sa forme lors de la fonte du fusible, chassant ainsi la matière fondue vers la zone des conducteurs de pontage 6, 7. Le tampon (présentant une forme comme sur les figures 21 et 22, ou présentant une forme de membrane comme sur les figures 17 à 19) est défini comme un élément qui exerce une pression sur la réserve de matière conductrice fusible 12, en direction des conducteurs de pontage 6, 7, sous l'effet de moyens élastiques (comme le ressort 13 des figures 21 et 22), ou de l'élasticité du tampon lui-même, notamment lorsqu'il est en forme de membrane (comme sur les figures 17 à 19), ou encore de l'effet de la dilatation thermique du tampon ou du rétreint du tampon lorsqu'il est réalisé dans un matériau thermorétractable.

Un autre exemple dudit élément de transfert utilise les forces de dilatation d'un matériau. Par exemple le tampon (sans ressort cette fois) peut être de type silicone, matériau polymère haute température ayant un fort coefficient de dilatation, ou une mousse de silicone à pores fermés, pour laquelle la dilatation sera principalement provoquée par la dilatation du gaz enfermé dans les pores. Ce tampon, par son augmentation de volume suite à l'élévation de température, contraindra la réserve de matière conductrice fusible 12 une fois liquide en direction de la zone des conducteurs de pontage 6, 7.

Un autre exemple dudit élément de transfert utilise les forces dues à la tension de surface comme solution de transfert de matière, comme dans le mode de réalisation des figures 22 à 24. La réserve de matière conductrice fusible 12 peut ainsi présenter une forme allongée à l'état solide, voire cylindrique. En fondant, la réserve de matière conductrice fusible 12 prendra une forme de boule à l'état liquide dont la hauteur ou la largeur sera supérieure aux dimensions initiales, permettant de mouiller la zone des conducteurs de pontage 6, 7, même si cette zone est située au-dessus de la réserve de matière conductrice fusible 12. La tension de surface permet aussi les déplacements sous l'effet de la capillarité.

Un autre exemple dudit élément de transfert utilise un polymère thermorétractable. Ainsi, outre la gravité, ou en remplacement de cette dernière, le transfert de matière peut être favorisé par une force d'appui par le tampon qui peut être une membrane thermorétractable définissant la chambre de pontage 10, comme dans le mode de réalisation des figures 17 à 19. Cette membrane peut appliquer une force de pression en se resserrant, tendant à chasser la réserve de matière conductrice fusible 12, lorsque celui-ci est liquide, à travers éventuellement un isolant électrique perméable 26, pour remplir l'espace entre les conducteurs de pontage 6, 7. La force de pression peut être appliquée par le tampon si la membrane le constituant est élastique, pressée par un ressort ou réalisée en matériau thermorétractable. Comme matériau thermorétractable adapté à la gamme de température d'un alliage d'étain en fusion par exemple, on peut citer le PVDF réticulé ou le caoutchouc silicone.

Le polymère thermorétractable peut entourer les conducteurs de pontage 6, 7, qui eux-mêmes entourent la réserve de matière conductrice fusible 12 (comme sur la figure 17). En variante, le polymère thermorétractable peut entourer la réserve de matière conductrice fusible 12, qui elle-même vient entourer les conducteurs de pontage 6, 7.

Selon un autre exemple dudit élément de transfert, la réserve de matière conductrice fusible 12 est réalisée dans un matériau susceptible magnétiquement, de sorte qu'il puisse être déplacé sous l'effet d'un champ magnétique. Le déplacement de la réserve de matière conductrice fusible 12 une fois fondue est alors réalisé par des forces magnétiques, le champ magnétique étant soit généré par le courant traversant le dispositif, soit fourni par un aimant.

Ainsi, de nombreuses possibilités existent pour mettre en œuvre ledit élément de transfert chargé de faire migrer la réserve de matière conductrice fusible 12, lorsqu'elle est à l'état liquide, vers les conducteurs de pontage 6, 7, en employant notamment la gravité, la tension de surface, l'électromagnétisme, un appui mécanique élastique permanent, un appui mécanique thermoactivé (comme la dilatation ou la thermorétractation). Ces possibilités peuvent être mises en œuvre indépendamment ou de manière combinée. L'homme du métier peut ainsi employer tout type d'élément de transfert connu.

Par ailleurs, différentes alternatives sont possibles pour l'isolant électrique perméable 26, chargé de l'isolation électrique entre la zone de la réserve de matière conductrice fusible 12 et la zone des conducteurs de pontage 6, 7. Par exemple, l'isolant électrique perméable 26 peut comporter des trous (comme dans les modes de réalisation des figures 15 à 21), et en variante l'isolant électrique perméable 26 peut être apte à se rétracter lorsqu'il est soumis à la température de la réserve de matière conductrice fusible 12 à l'état liquide, de sorte que les trous s'agrandissent afin de laisser plus de passage à la matière en fusion (grâce à l'usage d'un thermorétractable, par exemple).

Selon un autre exemple, l'isolant électrique perméable 26 peut être choisi dans un matériau qui se voit détruit lorsqu'il est soumis à la température de la réserve de matière conductrice fusible 12 lorsque cette dernière est à l'état liquide, comme dans le mode de réalisation de la figure 25.

## Revendications

1. Dispositif d'isolement (2) d'accumulateur électrique, adapté à isoler un accumulateur électrique d'un circuit électrique en assurant la continuité de ce circuit électrique, **caractérisé en ce qu'**il comporte :
- une première borne (B1) destinée à la connexion du dispositif d'isolement (2) avec un accumulateur électrique ;
- une deuxième borne (B2) destinée à la connexion du dispositif d'isolement (2) avec un accumulateur électrique et avec un circuit électrique ;
- une troisième borne (B3) destinée à la connexion du dispositif d'isolement (2) avec un circuit électrique ;
- une chambre de pontage (10) dans laquelle est disposé un dispositif de pontage (4) qui comporte deux conducteurs de pontage (6, 7) séparés par un interstice (8), l'un des conducteurs de pontage étant raccordé à la deuxième borne (B2) et l'autre conducteur de pontage étant raccordé à la troisième borne (B3) ;
- un fusible (3) comportant un conducteur coupe-circuit (23) connecté entre la première borne (B1) et la troisième borne (B3), ce conducteur coupe-circuit (23) étant disposé dans la chambre de pontage (10), le fusible (3) étant calibré pour assurer la fusion du conducteur coupe-circuit (23) lorsque l'intensité du courant le traversant dépasse une valeur de seuil prédéterminée ;
- une réserve de matière conductrice fusible (12) dont la température de fusion est inférieure à la température de fusion du conducteur coupe-circuit (23), la réserve de matière conductrice fusible (12) étant disposée dans la chambre de pontage (10), et étant adaptée à se transférer à l'état liquide sur le dispositif de pontage (4).

2. Dispositif d'isolement selon la revendication 1, **caractérisé en ce que** le conducteur coupe-circuit (23) est disposé en vis-à-vis de la réserve de matière conductrice fusible (12).

3. Dispositif d'isolement selon l'une des revendications 1 ou 2, **caractérisé en ce que** la réserve de matière conductrice fusible (12) est disposée en vis-à-vis des conducteurs de pontage (6, 7).

4. Dispositif d'isolement selon l'une des revendications précédentes, **caractérisé en ce que** les conducteurs de pontage (6, 7) sont agencés en dessous de la réserve de matière conductrice fusible (12).

5. Dispositif selon l'une des revendications 1 à 3, **caractérisé en ce que** les conducteurs de pontage (6, 7) sont agencés circonférenciellement par rapport à la réserve de matière conductrice fusible (12).

6. Dispositif d'isolement selon l'une des revendications précédentes, **caractérisé en ce qu'**il comporte un tampon (27) sollicitant la réserve de matière conductrice fusible (12) en direction des conducteurs de pontage (6, 7).

7. Dispositif selon l'une des revendications précédentes, **caractérisé en ce qu'**il comporte un isolant électrique thermoconducteur (11) placé entre le conducteur coupe-circuit (23) et la réserve de matière conductrice fusible (12).

8. Dispositif selon l'une des revendications précédentes, **caractérisé en ce qu'**il comporte un isolant électrique perméable (26) placé entre la réserve de matière conductrice fusible (12) et les conducteurs de pontage (6, 7), cet isolant électrique perméable (26) étant adapté à laisser passer le matériau de la réserve de matière conductrice fusible (12) lorsque ce dernier est à l'état liquide.

9. Dispositif selon la revendication 8, **caractérisé en ce que** ledit isolant électrique perméable (26) est une feuille de matériau fusible, dont la température de fusion est inférieure à la température de fusion de la réserve de matière conductrice fusible (12).

10. Dispositif d'isolement selon l'une des revendications précédentes, **caractérisé en ce que** les conducteurs de pontage (6, 7) présentent des motifs géométriques complémentaires imbriqués, l'interstice (8) étant disposé le long de ces motifs géométriques.

11. Dispositif d'isolement selon l'une des revendications précédentes, **caractérisé en ce que** les conducteurs de pontage (6, 7) présentent un état de surface adapté au brasage par le matériau de la réserve de matière conductrice fusible (12), lorsque ce dernier est à l'état liquide.

12. Dispositif selon l'une des revendications précédentes, **caractérisé en ce que** la réserve de matière conductrice fusible (12) est agencée sous forme d'au moins un amas rapporté sur au moins l'un des conducteurs de pontage (6, 7), et adapté à se répandre dans l'interstice (8) lorsque la réserve de matière conductrice fusible (12) est à l'état liquide.

13. Dispositif d'isolement selon l'une des revendications précédentes, **caractérisé en ce qu'**il comporte au moins une branche de commande (16) disposée entre la deuxième borne (B2) et la troisième borne (B3), en parallèle du dispositif de pontage (4), la branche de commande (16) comportant au moins un interrupteur commandé.

14. Dispositif d'isolement selon la revendication 13, **caractérisé en ce que** le au moins un interrupteur commandé de la branche de commande comporte un interrupteur (17) commandé par un signal.

15. Dispositif d'isolement selon l'une des revendications 13 ou 14, **caractérisé en ce que** le au moins un interrupteur commandé de la branche de commande comporte un interrupteur (19) commandé par le franchissement d'un seuil de température.

16. Dispositif d'isolement selon l'une des revendications 13 à 15, **caractérisé en ce que** le au moins un interrupteur commandé de la branche de commande comporte un interrupteur (22) commandé par le franchissement d'un seuil de pression.

17. Dispositif d'isolement selon l'une des revendications précédentes, **caractérisé en ce que** le fusible (3A, 3B) comporte deux conducteurs coupe-circuit montés en parallèle, l'un de ces conducteurs coupe-circuit présentant une température de fusion supérieure à la température de fusion de l'autre conducteur coupe-circuit.

18. Dispositif d'isolement selon l'une des revendications précédentes, **caractérisé en ce qu'**il comporte une résistance de décharge (20) montée en parallèle du fusible (3).

19. Dispositif d'isolement selon l'une des revendications précédentes, **caractérisé en ce que** la réserve de matière conductrice fusible (12) est adaptée à se transférer à l'état liquide sur le dispositif de pontage (4) par la gravité, et/ou sa tension de surface, et/ou une sollicitation électromagnétique, et/ou un appui mécanique élastique permanent, et/ou un appui mécanique thermoactivé.

20. Circuit électrique comportant un premier accumulateur électrique (1), au moins un deuxième accumulateur électrique (15), et une charge (9) alimentée par ces accumulateurs électriques, **caractérisé en ce qu'**il comporte un dispositif d'isolement (2) d'accumulateur électrique conforme à l'une des revendications 1 à 19 dont :
- la première borne (B1) est connectée à une borne du premier accumulateur électrique (1) ;
- la deuxième borne (B2) est connectée à une autre borne du premier accumulateur électrique (1), et à une borne de ladite charge (9) ;
- une troisième borne (B3) est connectée à une autre borne de ladite charge (9) ;
le dispositif d'isolement (2) d'accumulateur électrique étant adapté à isoler le premier accumulateur électrique (1) du deuxième accumulateur électrique (15) et de ladite charge (9), en assurant la continuité de l'alimentation de ladite charge (9) par le deuxième accumulateur électrique (15).

21. Circuit électrique selon la revendication 20, **caractérisé en ce que** le premier accumulateur électrique (1) et au moins le deuxième accumulateur électrique (15) sont montés en série avec la charge (9) par l'intermédiaire du fusible (3).

22. Procédé d'isolement d'un accumulateur électrique par rapport à un circuit électrique, **caractérisé en ce qu'**il met en œuvre un dispositif d'isolement (2) d'accumulateur électrique selon l'une des revendications 1 à 19, et **en ce qu'**il comporte les étapes suivantes :
- soumettre le fusible (3) à un surcourant qui échauffe le conducteur coupe-circuit (23) et la réserve de matière conductrice fusible (12) au-delà de leur température de fusion respective ;
- transférer au moins une partie de la réserve de matière conductrice fusible (12) qui est à l'état liquide dans l'interstice (8) séparant les conducteurs de pontage (6, 7).

## Patentansprüche

1. Vorrichtung (2) zur Isolierung eines elektrischen Akkumulators, die dazu ausgelegt ist, einen elektrischen Akkumulator von einem Stromkreis zu isolieren und dabei die Kontinuität dieses Stromkreises zu gewährleisten, **dadurch gekennzeichnet, dass** sie Folgendes aufweist:
- einen ersten Anschluss (B1) für die Verbindung der Isoliervorrichtung (2) mit einem elektrischen Akkumulator;
- einen zweiten Anschluss (B2) für die Verbindung der Isoliervorrichtung (2) mit einem elektrischen Akkumulator und mit einem elektrischen Stromkreis;
- einen dritten Anschluss (B3) für die Verbindung der Isoliervorrichtung (2) mit einem elektrischen Stromkreis;
- eine Überbrückungskammer (10), in der eine Überbrückungsvorrichtung (4) angeordnet ist, die zwei durch einen Zwischenraum (8) getrennte Überbrückungsleiter (6, 7) aufweist, wobei einer der Überbrückungsleiter mit dem zweiten Anschluss (B2) verbunden ist und der andere Überbrückungsleiter mit dem dritten Anschluss (B3) verbunden ist;
- eine Sicherung (3) mit einem zwischen dem ersten Anschluss (B1) und dem dritten Anschluss (B3) angeschlossenen Sicherungsleiter (23), wobei dieser Sicherungsleiter (23) in der Überbrückungskammer (10) angeordnet ist, wobei die Sicherung (3) so kalibriert ist, dass sie das Schmelzen des Sicherungsleiters (23) gewährleistet, wenn die Stromstärke durch ihn einen vorgegebenen Schwellenwert überschreitet;
- einen Vorrat an schmelzbarem leitfähigem Material (12), dessen Schmelztemperatur niedriger ist als die Schmelztemperatur des Sicherungsleiters (23), wobei der Vorrat an schmelzbarem leitfähigem Material (12) in der Überbrückungskammer (10) angeordnet ist und dazu ausgelegt ist, im flüssigen Zustand auf die Überbrückungsvorrichtung (4) übertragen zu werden.

2. Isoliervorrichtung nach Anspruch 1, **dadurch gekennzeichnet, dass** der Sicherungsleiter (23) gegenüber dem Vorrat an schmelzbarem leitfähigem Material (12) angeordnet ist.

3. Isoliervorrichtung nach einem der Ansprüche 1 oder 2, **dadurch gekennzeichnet, dass** der Vorrat an schmelzbarem leitfähigem Material (12) gegenüber den Überbrückungsleitern (6, 7) angeordnet ist.

4. Isoliervorrichtung nach einem der vorhergehenden Ansprüche, **dadurch gekennzeichnet, dass** die Überbrückungsleiter (6, 7) unterhalb des Vorrats an schmelzbarem leitfähigem Material (12) angeordnet sind.

5. Vorrichtung nach einem der Ansprüche 1 bis 3, **dadurch gekennzeichnet, dass** die Überbrückungsleiter (6, 7) in Bezug auf den Vorrat an schmelzbarem leitfähigem Material (12) in Umfangsrichtung angeordnet sind.

6. Isoliervorrichtung nach einem der vorhergehenden Ansprüche, **dadurch gekennzeichnet, dass** sie einen Puffer (27) aufweist, der den Vorrat an schmelzbarem leitfähigem Material (12) in Richtung der Überbrückungsleiter (6, 7) beansprucht.

7. Vorrichtung nach einem der vorhergehenden Ansprüche, **dadurch gekennzeichnet, dass** sie einen wärmeleitenden elektrischen Isolator (11) aufweist, der zwischen dem Sicherungsleiter (23) und dem Vorrat an schmelzbarem leitfähigem Material (12) angeordnet ist.

8. Vorrichtung nach einem der vorhergehenden Ansprüche, **dadurch gekennzeichnet, dass** sie einen durchlässigen elektrischen Isolator (26) aufweist, der zwischen dem Vorrat an schmelzbarem leitfähigem Material (12) und den Überbrückungsleitern (6, 7) angeordnet ist, wobei der durchlässige elektrische Isolator (26) dazu ausgelegt ist, das Material des Vorrats an schmelzbarem leitfähigem Material (12) durchzulassen, wenn es sich in flüssigem Zustand befindet.

9. Vorrichtung nach Anspruch 8, **dadurch gekennzeichnet, dass** der durchlässige elektrische Isolator (26) ein Blatt aus schmelzbarem Material ist, dessen Schmelztemperatur niedriger ist als die Schmelztemperatur des Vorrats an schmelzbarem leitfähigem Material (12).

10. Isoliervorrichtung nach einem der vorhergehenden Ansprüche, **dadurch gekennzeichnet, dass** die Überbrückungsleiter (6, 7) komplementäre, verschachtelte geometrische Muster aufweisen, wobei der Zwischenraum (8) entlang dieser geometrischen Muster angeordnet ist.

11. Isoliervorrichtung nach einem der vorhergehenden Ansprüche, **dadurch gekennzeichnet, dass** die Überbrückungsleiter (6, 7) eine Oberflächenbeschaffenheit aufweisen, die zum Löten mit dem Material des Vorrats an schmelzbarem leitfähigem Material (12) ausgelegt ist, wenn sich dieses in flüssigem Zustand befindet.

12. Vorrichtung nach einem der vorhergehenden Ansprüche, **dadurch gekennzeichnet, dass** der Vorrat an schmelzbarem leitfähigem Material (12) in Form von mindestens einer Anhäufung angeordnet ist, die an mindestens einem der Überbrückungsleiter (6, 7) angebracht ist und dazu ausgelegt ist, sich in den Zwischenraum (8) auszubreiten, wenn sich der Vorrat an schmelzbarem leitfähigem Material (12) im flüssigen Zustand befindet.

13. Isoliervorrichtung nach einem der vorhergehenden Ansprüche, **dadurch gekennzeichnet, dass** sie mindestens einen Steuerzweig (16) aufweist, der zwischen dem zweiten Anschluss (B2) und dem dritten Anschluss (B3) parallel zur Überbrückungsvorrichtung (4) angeordnet ist, wobei der Steuerzweig (16) mindestens einen gesteuerten Schalter aufweist.

14. Isoliervorrichtung nach Anspruch 13, **dadurch gekennzeichnet, dass** der mindestens eine gesteuerte Schalter des Steuerzweigs einen signalgesteuerten Schalter (17) aufweist.

15. Isoliervorrichtung nach einem der Ansprüche 13 oder 14, **dadurch gekennzeichnet, dass** der mindestens eine gesteuerte Schalter des Steuerzweigs einen Schalter (19) aufweist, der durch das Überschreiten einer Temperaturschwelle gesteuert wird.

16. Isoliervorrichtung nach einem der Ansprüche 13 bis 15, **dadurch gekennzeichnet, dass** der mindestens eine gesteuerte Schalter des Steuerzweigs einen Schalter (22) aufweist, der durch das Überschreiten einer Druckschwelle gesteuert wird.

17. Isoliervorrichtung nach einem der vorhergehenden Ansprüche, **dadurch gekennzeichnet, dass** die Sicherung (3A, 3B) zwei parallel geschaltete Stromkreisunterbrecherleiter aufweist, wobei einer dieser Stromkreisunterbrecherleiter eine Schmelztemperatur aufweist, die höher ist als die Schmelztemperatur des anderen Stromkreisunterbrecherleiters.

18. Isoliervorrichtung nach einem der vorhergehenden Ansprüche, **dadurch gekennzeichnet, dass** sie einen Entladewiderstand (20) aufweist, der parallel zur Sicherung (3) geschaltet ist.

19. Isoliervorrichtung nach einem der vorhergehenden Ansprüche, **dadurch gekennzeichnet, dass** der Vorrat an schmelzbarem leitfähigem Material (12) dazu ausgelegt ist, durch die Schwerkraft und/oder seine Oberflächenspannung und/oder eine elektromagnetische Beanspruchung und/oder eine dauerelastische mechanische Auflage und/oder eine thermisch aktivierte mechanische Auflage in flüssigem Zustand auf die Überbrückungsvorrichtung (4) übertragen zu werden.

20. Elektrischer Stromkreis mit einem ersten elektrischen Akkumulator (1), mindestens einem zweiten elektrischen Akkumulator (15) und einer Last (9), die von diesen elektrischen Akkumulatoren gespeist wird, **dadurch gekennzeichnet, dass** er eine Vorrichtung (2) zur Isolierung eines elektrischen Akkumulators gemäß einem der Ansprüche 1 bis 19 aufweist, wobei:
- der erste Anschluss (B1) mit einem Anschluss des ersten elektrischen Akkumulators (1) verbunden ist;
- der zweite Anschluss (B2) mit einem anderen Anschluss der ersten elektrischen Akkumulators (1) und mit einem Anschluss der Last (9) verbunden ist;
- ein dritter Anschluss (B3) mit einem anderen Anschluss der Last (9) verbunden ist;
wobei die Vorrichtung (2) zur Isolierung eines elektrischen Akkumulators dazu ausgelegt ist, den ersten elektrischen Akkumulator (1) von dem zweiten elektrischen Akkumulator (15) und der Last (9) zu isolieren, wobei die kontinuierliche Versorgung der Last (9) durch den zweiten elektrischen Akkumulator (15) sichergestellt wird.

21. Elektrischer Stromkreis nach Anspruch 20, **dadurch gekennzeichnet, dass** der erste elektrische Akkumulator (1) und mindestens der zweite elektrische Akkumulator (15) über die Sicherung (3) mit der Last (9) in Reihe geschaltet sind.

22. Verfahren zur Isolierung eines elektrischen Akkumulators von einem Stromkreis, **dadurch gekennzeichnet, dass** es eine Vorrichtung (2) zur Isolierung eines elektrischen Akkumulators nach einem der Ansprüche 1 bis 19 einsetzt und dass es die folgenden Schritte aufweist:
- Beaufschlagen der Sicherung (3) mit einem Überstrom, der den Sicherungsleiter (23) und den Vorrat aus schmelzbarem leitfähigem Material (12) über ihre jeweilige Schmelztemperatur hinaus erhitzt;
- Übertragen mindestens eines Teils des Vorrats an schmelzbarem leitfähigem Material (12), das sich im flüssigen Zustand befindet, in den Zwischenraum (8), der die Überbrückungsleiter (6, 7) trennt.

## Claims

1. Device (2) for isolating an electric accumulator, designed to isolate an electric accumulator from an electrical circuit while ensuring the continuity of this electrical circuit, **characterized in that** it comprises:
- a first terminal (B1) for connecting the isolating device (2) to an electric accumulator;
- a second terminal (B2) for connecting the isolating device (2) to an electric accumulator and to an electrical circuit;
- a third terminal (B3) for connecting the isolating device (2) to an electrical circuit;
- a bridging chamber (10) in which is arranged a bridging device (4) which comprises two bridging conductors (6, 7) separated by a gap (8), one of the bridging conductors being attached to the second terminal (B2) and the other bridging conductor being attached to the third terminal (B3);
- a fuse (3) comprising a circuit-breaker conductor (23) connected between the first terminal (B1) and the third terminal (B3), this circuit-breaker conductor (23) being arranged in the bridging chamber (10), the fuse (3) being calibrated to ensure that the circuit-breaker conductor (23) melts when the intensity of the current passing through it exceeds a predetermined threshold value;
- a reserve of fusible conductive material (12) the melting temperature of which is lower than the melting temperature of the circuit-breaker conductor (23), the reserve of fusible conductive material (12) being arranged in the bridging chamber (10) and being designed to be transferred in the liquid state to the bridging device (4).

2. Isolating device according to Claim 1, **characterized in that** the circuit-breaker conductor (23) is arranged opposite the reserve of fusible conductive material (12).

3. Isolating device according to either of Claims 1 and 2, **characterized in that** the reserve of fusible conductive material (12) is arranged opposite the bridging conductors (6, 7).

4. Isolating device according to one of the preceding claims, **characterized in that** the bridging conductors (6, 7) are arranged below the reserve of fusible conductive material (12).

5. Device according to one of Claims 1 to 3, **characterized in that** the bridging conductors (6, 7) are arranged circumferentially with respect to the reserve of fusible conductive material (12).

6. Isolating device according to one of the preceding claims, **characterized in that** it comprises a buffer (27) urging the reserve of fusible conductive material (12) in the direction of the bridging conductors (6, 7).

7. Device according to one of the preceding claims, **characterized in that** it comprises a thermally conductive electrical insulator (11) placed between the circuit-breaker conductor (23) and the reserve of fusible conductive material (12).

8. Device according to one of the preceding claims, **characterized in that** it comprises a permeable electrical insulator (26) placed between the reserve of fusible conductive material (12) and the bridging conductors (6, 7), this permeable electrical insulator (26) being designed to allow the material of the reserve of fusible conductive material (12) to pass through when the latter is in the liquid state.

9. Device according to Claim 8, **characterized in that** said permeable electrical insulator (26) is a sheet of fusible material the melting temperature of which is lower than the melting temperature of the reserve of fusible conductive material (12).

10. Isolating device according to one of the preceding claims, **characterized in that** the bridging conductors (6, 7) have complementary embedded geometric patterns, the gap (8) being arranged along these geometric patterns.

11. Isolating device according to one of the preceding claims, **characterized in that** the bridging conductors (6, 7) have a surface state suitable for brazing by the material of the reserve of fusible conductive material (12) when the latter is in the liquid state.

12. Device according to one of the preceding claims, **characterized in that** the reserve of fusible conductive material (12) is arranged in the form of at least one cluster attached to at least one of the bridging conductors (6, 7) and designed to spread into the gap (8) when the reserve of fusible conductive material (12) is in the liquid state.

13. Isolating device according to one of the preceding claims, **characterized in that** it comprises at least one control branch (16) arranged between the second terminal (B2) and the third terminal (B3), in parallel with the bridging device (4), the control branch (16) comprising at least one controlled switch.

14. Isolating device according to Claim 13, **characterized in that** the at least one controlled switch of the control branch comprises a switch (17) controlled by a signal.

15. Isolating device according to either of Claims 13 and 14, **characterized in that** the at least one controlled switch of the control branch comprises a switch (19) controlled by the crossing of a temperature threshold.

16. Isolating device according to one of Claims 13 to 15, **characterized in that** the at least one controlled switch of the control branch comprises a switch (22) controlled by the crossing of a pressure threshold.

17. Isolating device according to one of the preceding claims, **characterized in that** the fuse (3A, 3B) comprises two circuit-breaker conductors connected in parallel, one of these circuit-breaker conductors having a melting temperature greater than the melting temperature of the other circuit-breaker conductor.

18. Isolating device according to one of the preceding claims, **characterized in that** it comprises a discharge resistor (20) connected in parallel with the fuse (3).

19. Isolating device according to one of the preceding claims, **characterized in that** the reserve of fusible conductive material (12) is designed to be transferred in the liquid state to the bridging device (4) by gravity, and/or its surface tension, and/or electromagnetic loading, and/or permanent elastic mechanical bearing, and/or thermally activated mechanical bearing.

20. Electrical circuit comprising a first electric accumulator (1), at least a second electric accumulator (15), and a load (9) supplied with power by these electric accumulators, **characterized in that** it comprises a device (2) for isolating an electric accumulator according to one of Claims 1 to 19, of which:
- the first terminal (B1) is connected to a terminal of the first electric accumulator (1);
- the second terminal (B2) is connected to another terminal of the first electric accumulator (1) and to a terminal of said load (9);
- a third terminal (B3) is connected to another terminal of said load (9);
the device (2) for isolating an electric accumulator being designed to isolate the first electric accumulator (1) from the second electric accumulator (15) and from said load (9) while ensuring the continuity of the supply of power to said load (9) by the second electric accumulator (15).

21. Electrical circuit according to Claim 20, **characterized in that** the first electric accumulator (1) and at least the second electric accumulator (15) are connected in series with the load (9) via the fuse (3).

22. Method for isolating an electric accumulator from an electrical circuit, **characterized in that** it uses a device (2) for isolating an electric accumulator according to one of Claims 1 to 19 and **in that** it comprises the following steps:
- subjecting the fuse (3) to an overcurrent which heats the circuit-breaker conductor (23) and the reserve of fusible conductive material (12) above their respective melting temperature;
- transferring at least some of the reserve of fusible conductive material (12), which is in the liquid state, into the gap (8) separating the bridging conductors (6, 7).
